# EUROPÄISCHE PATENTSCHRIFT

(11) **EP 4 157 591 B1**
(45) Veröffentlichungstag und Bekanntmachung des Hinweises auf die Patenterteilung: **07.08.2024**
(21) Anmeldenummer: 21730835.2
(22) Anmeldetag: 31.05.2021
(51) Int. Cl.: B25J 9/00

(54) **ARM-UNTERSTÜTZUNGSMECHANISMUS**
ARM SUPPORT MECHANISM
MÉCANISME DE SUPPORT DE BRAS

(30) Priorität: 29.05.2020 DE 102020206806
(43) Veröffentlichungstag der Anmeldung: 05.04.2023
(73) Patentinhaber: Fraunhofer-Gesellschaft zur Förderung der angewandten Forschung e.V., 80686 München (DE)
(72) Erfinder: MÜLLER-GRAF, Felix, 70569 Stuttgart (DE); TRÖSTER, Mark, 70569 Stuttgart (DE); SCHIEBL, Jonas, 70569 Stuttgart (DE); MAUFROY, Christophe, 70569 Stuttgart (DE); OSTRAVSKY, Jonas, 70569 Stuttgart (DE); NOLTE, Linda, 70569 Stuttgart (DE); WAGNER, David, 70569 Stuttgart (DE)
(74) Vertreter: Pfenning, Meinig & Partner mbB
(86) Internationale Anmeldenummer: PCT/EP2021/064564
(87) Internationale Veröffentlichungsnummer: WO 2021/240018

(56) Entgegenhaltungen:
- WO-A1-2020/043851
- CN-A- 110 450 139
- DE-A1- 102017 112 436

## Beschreibung

Die Erfindung betrifft einen Arm-Unterstützungsmechanismus gemäß dem Oberbegriff des Anspruchs 1 zur Unterstützung einer Bewegung eines Arms eines Benutzers um einen Schulterkomplex des Benutzers. Der Arm-Unterstützungsmechanismus weist einen Armangriff, der eingerichtet ist, an dem Arm des Benutzers anzugreifen, ein Beckenmodul, das eingerichtet ist, an einem Becken des Benutzers anzugreifen, ein Drehgelenk, eine armseitige Verbindung zwischen dem Armangriff und dem Drehgelenk sowie eine beckenseitige Verbindung zwischen dem Beckenmodul und dem Drehgelenk auf. Der Arm-Unterstützungsmechanismus weist außerdem einen Antrieb auf, mit dem das Drehgelenk um eine Drehgelenkachse antreibbar ist. Der Antrieb ist eingerichtet, die armseitige Verbindung und die beckenseitige Verbindung um die Drehachse des Drehgelenks gegeneinander zu bewegen.

Viele Tätigkeiten im Arbeitsalltag erfordern das manuelle Hantieren mit schweren Gegenständen oder Personen. Derartige Tätigkeiten sind häufig mit großer Anstrengung für die Betreffenden verbunden. Solche Tätigkeiten sind beispielsweise das manuelle Hantieren von narkotisierten Patienten in einem OP-Vorbereitungsraum oder allgemeiner Hebe-, Halt-, Schiebe-, Zieh- und Überkopftätigkeiten, beispielsweise in Logistik und Produktion. Um muskuloskelettalen Berufskrankheiten vorbeugen zu können, ist es wünschenswert, für solche Tätigkeiten eine Unterstützung zur Verfügung zu stellen.

Aus dem Stand der Technik sind Systeme wie Patientenlifter, Rutschbretter und mechanische Seilzugsysteme bekannt. Auch passive Exoskelette für Überkopfarbeiten und Hebetätigkeiten wurden im Stand der Technik bereits vorgeschlagen, so beispielsweise in der gattungsgemäßen DE 10 2017 112 436 A1. In dieser wirkt eine Unterstützungskraft rein passiv mithilfe eines Elastomerseilzugs über Hebel. CN 110450139 A offenbart einen weiteren gattungsgemäßen Arm-Unterstützungsmechanismus zur Unterstützung eines Hebens eines Armes eines Benutzers.

Bekannte aktive Exoskelette sind ihrer Grundbauweise sehr komplex und für den praktischen Einsatz meistens zu schwer. Darüber hinaus sind bekannte Lösungen meist für spezifische Anwendungen ausgelegt und wenig variabel einsetzbar.

Aufgabe der vorliegenden Erfindung ist es, einen Mechanismus anzugeben, der eine geringe Komplexität aufweist, mit geringem Gewicht realisiert werden kann und gleichzeitig die Unterstützung von Personen mit großer Kraft erlaubt. Diese Aufgabe wird gelöst durch den Arm-Unterstützungsmechanismus nach Anspruch 1. Die abhängigen Ansprüche geben vorteilhafte Weiterbildungen des erfindungsgemäßen Arm-Unterstützungsmechanismus an.

Erfindungsgemäß wird ein Arm-Unterstützungsmechanismus zur Unterstützung einer Bewegung eines Arms eines Benutzers um ein Schultergelenk bzw. einen Schulterkomplex des Benutzers angegeben. Der Schulterkomplex des Menschen enthält eine Vielzahl von Elementen, die jedoch effektiv wie ein Gelenk wirken. Die Begriffe Schulterkomplex und Schultergelenk sollen daher hier gleichbedeutend verwendet werden. Das Schultergelenk ermöglicht eine Drehung des Arms um eine Vielzahl verschiedener Drehachsen. Der erfindungsgemäße Arm-Unterstützungsmechanismus weist ein Drehgelenk auf, das um eine Drehgelenkachse drehbar ist. Der erfindungsgemäße Arm-Unterstützungsmechanismus unterstützt daher die Bewegung des Arms um diese Drehachse des Drehgelenks bzw. eine zu dieser koaxialen Drehachse des Schulterkomplexes.

Unter einer Unterstützung einer Bewegung soll hierbei eine Kraftwirkung des Arm-Unterstützungsmechanismus auf den Arm des Benutzers verstanden werden, die den Arm bewegt oder in einer unbewegten Position stützt. Bei einer beispielsweise hebenden Tätigkeit würde der Arm-Unterstützungsmechanismus eine Kraft ausüben, die die hebende Bewegung unterstützt, sodass der Nutzer mit seinen Muskeln eine geringere Kraft aufwenden muss als ohne die Unterstützung. Bei einer haltenden Tätigkeit würde der Arm-Unterstützungsmechanismus eine Kraft ausüben, die das Halten des Arms in der haltenden Position unterstützt, sodass der Benutzer mit seinen Muskeln ebenfalls eine geringere Kraft zum Halten ausüben muss. Bei einer schiebenden oder ziehenden Tätigkeit kann der Arm-Unterstützungsmechnismus eine Kraft ausüben, welche die Schub- bzw. Ziehbewegung unterstützt.

Erfindungsgemäß weist der Arm-Unterstützungsmechanismus einen Armangriff auf, der eingerichtet ist, an dem Arm des Benutzers anzugreifen, vorzugsweise am Oberarm oder am Ellenbogengelenk. Grundsätzlich ist, insbesondere mit einer optionalen Erweiterung, auch ein Angreifen am Unterarm möglich, hierbei stünde jedoch dann der Freiheitsgrad des Ellenbogengelenks nicht zur Verfügung. Vorteilhafterweise kann der Armangriff eine Armschale sein, in die der Arm gelegt werden kann. Auch eine Armmanschette, die den Arm umgreifen kann, ist beispielsweise möglich.

Der Arm-Unterstützungsmechanismus weist außerdem ein Beckenmodul auf, das eingerichtet ist, an einem Becken oder einer Hüfte des Benutzers anzugreifen. Das Beckenmodul kann entsprechend auch als Hüftmodul bezeichnet werden. Dabei ist das Beckenmodul vorzugsweise so ausgestaltet, dass es an der Hüfte bzw. dem Becken des Benutzers fixierbar ist und zwar besonders bevorzugt dergestalt, dass Kräfte, die auf das Beckenmodul wirken, direktauf die Hüfte, das Becken und/oder Beine des Benutzers geleitet werden, vorzugsweise jedoch nicht auf die Wirbelsäule des Benutzers. Das Beckenmodul kann beispielsweise um die Taille des Benutzers greifen und auf dem Becken des Benutzers lasten. Das Beckenmodul kann beispielsweise eine Beckenschale sein.

Der Arm-Unterstützungsmechanismus weist außerdem das bereits erwähnte Drehgelenk auf, das um eine Drehachse des Drehgelenks drehbar ist. Diese Achse, im Folgenden auch als Drehgelenkachse bezeichnet, sollte im einem Zustand, in dem der Arm-Unterstützungsmechanismus bestimmungsgemäß vom Benutzer getragen wird, koaxial liegen zu einer Achse, um die der Schulterkomplex des Benutzers drehbar ist. Bevorzugterweise ist das Drehgelenk um genau eine Drehachse drehbar.

Erfindungsgemäß weist der Arm-Unterstützungsmechanismus außerdem eine armseitige Verbindung auf, die mit einem Ende, das im Folgenden als armangriffsseitiges Ende bezeichnet werden soll, am Armangriff angeordnet ist, und die mit ihrem entgegengesetzten Ende, das im Folgenden als drehgelenkseitiges Ende bezeichnet werden soll, am Drehgelenk angeordnet ist. Bevorzugterweise kann die armseitige Verbindung als Stange ausgestaltet sein.

Darüber hinaus weist der Arm-Unterstützungsmechanismus der Erfindung eine beckenseitige Verbindung auf, die mit einem ihrer Enden an dem Beckenmodul angeordnet ist. Dieses Ende soll im Folgenden als beckenmodulseitiges Ende bezeichnet werden. Mit ihrem entgegengesetzten Ende ist die beckenseitige Verbindung am Drehgelenk angeordnet. Dieses Ende soll im Folgenden als drehgelenkseitiges Ende bezeichnet werden. Auch die beckenseitige Verbindung kann vorteilhaft als Stange ausgestaltet sein. Um eine Anpassung an die Größe des Benutzers zu ermöglichen, kann die beckenseitige Verbindung vorteilhaft in ihrer Länge veränderbar und fixierbar sein. Hierzu kann sie beispielsweise als Teleskopstange ausgestaltet sein. Eine solche kann einen Fixierungsmechanismus zum Festlegen der Länge der Teleskopstange aufweisen.

Erfindungsgemäß weist der Arm-Unterstützungsmechanismus außerdem einen Antrieb auf, der eingerichtet ist, das Drehgelenk um die Drehachse des Drehgelenks anzutreiben. Unter einem Antrieb wird hier vorzugsweise ein aktives Element verstanden, also ein aktiver Antrieb. Ein aktiver Antrieb ist insbesondere ein solcher Antrieb, der eine Kraft bzw. ein Drehmoment um die Drehachse ausüben kann, ohne dass vorher eine Kraft auf den Antrieb ausgeübt werden musste, beispielsweise um diesen vorzuspannen. Ein derartiger aktiver Antrieb kann beispielsweise ein elektromechanischer Antrieb sein, alternativ sind auch beispielsweise pneumatische oder hydraulische Antriebe möglich, in denen der erforderliche Druck anders als durch eine Kraft auf den Antrieb erzeugt wird. Optional kann der Antrieb auch passiv oder semi-aktiv, aktivadaptiv, semi-passiv und/oder passiv-adaptiv sein.

Das Drehgelenk ist erfindungsgemäß eingerichtet, die armseitige Verbindung und die beckenseitige Verbindung um die Drehachse des Drehgelenks gegeneinander zu bewegen. Die armseitige Verbindung und die beckenseitige Verbindung können also eine Drehbewegung gegeneinander um die Drehgelenkachse ausüben.

In einer bevorzugten Ausgestaltung der Erfindung kann der Antrieb ein Drehantrieb sein, der am Drehgelenk angeordnet ist. Ein solcher Drehantrieb weist eine Drehantriebsachse auf, die vorteilhafterweise parallel liegt zur Drehgelenkachse und besonders bevorzugt zu dieser koaxial ist. Es sei angemerkt, dass es nicht erforderlich ist, dass die Drehgelenkachse und die Drehachse des Drehantriebs zueinander koaxial sind, da ein Drehmoment vom Antrieb auch beispielsweise über ein Getriebe oder einen Keilriemen auf das Drehgelenk übertragen werden kann. Gegenüber Linearantrieben hat ein Drehantrieb den Vorteil, mit weniger Komponenten auszukommen und dadurch Gewicht und Komplexität des Arm-Unterstützungsmechanismus zu reduzieren.

Erfindungsgemäß weist das Beckenmodul eine Verstell-Einheit, insbesondere eine Schiene, auf, wobei das beckenmodulseitige Ende der beckenseitigen Verbindung auf, in oder an dieser Schiene verschiebbar ist. Das beckenmodulseitige Ende der beckenseitigen Verbindung kann hierzu einen geeigneten Angriffsmechanismus aufweisen, der an der Schiene angreift und das beckenmodulseitige Ende in Kontakt mit der Schiene hält, während er eine Verschiebung des beckenmodulseitigen Endes entlang der Schiene erlaubt. Die Form der Schiene kann auf die gegebene Anwendung angepasst werden. In vielen Fällen vorteilhaft ist jedoch eine gerade Ausgestaltung der Schiene, sodass das beckenmodulseitige Ende der beckenseitigen Verbindung entlang einer Geraden verschiebbar ist.

Durch die Position des beckenmodulseitigen Endes entlang der Schiene lässt sich ein Angriffswinkel jener Kraft einstellen, die auf den Arm des Benutzers wirkt. Der Winkel zwischen dieser Kraft und der Längsrichtung des Arms hängt ab von dem Winkel des Arms um die Drehgelenkachse, wenn eine feste Position des beckenmodulseitigen Endes der beckenseitigen Verbindung angenommen wird. Wirkt bei gegebener Position des beckenmodulseitigen Endes der beckenseitigen Verbindung die Kraft auf den Arm im Wesentlichen senkrecht zur Längsrichtung des Arms, so wirkt diese Kraft bei anderen Positionen des Arms nicht genau senkrecht, sondern hat Kraftanteile in Richtung parallel zur Längsachse des Arms. Diese Kraftanteile werden dann nicht mehr zum Heben, Halten, Ziehen oder Schieben des Arms verwendet und können zu einer Verschiebung des Armangriffs oder zu schmerzhaften Scherkräften führen. Die Verschiebung des beckenmodulseitigen Endes der beckenseitigen Verbindung entlang der Schiene erlaubt es, einen im Wesentlichen senkrechten Angriff der Kraft am Arm des Benutzers bei verschiedenen Positionen des Arms zu ermöglichen.

Für viele Tätigkeiten ist es bevorzugt, wenn die Schiene in einem Zustand, in dem der Arm-Unterstützungsmechanismus bestimmungsgemäß an dem Benutzer angeordnet ist bzw. von dem Benutzer getragen wird, von dorsal kranial nach ventral kaudal verläuft, also von einer dem Kopf zugewandten, rückwärtigen Position zu einer den Füßen zugewandten, vorderseitigen Position des Benutzers. Sind die armseitige Verbindung und die beckenseitige Verbindung mit unveränderlicher Länge ausgestaltet, so begünstigt dieser Verlauf der Schiene den senkrechten Angriff der am Arm angreifenden Kraft in Bezug auf die Längsachse des Arms.

In einer einfachen Ausgestaltung kann das beckenmodulseitige Ende der beckenseitigen Verbindung an der Schiene fixierbar sein, beispielsweise mittels eines Schnellspanners, eines Drehrädchens, einer Klemme, einer Klemmschraube, eines Schnapphakens und/oder eines Bolzens. In dieser Ausgestaltung kann der Arm-Unterstützungsmechanismus fest auf eine Verwendung in einem bestimmten Winkelbereich des Arms eingestellt werden. Diese einfache Lösung ist zum Beispiel ausreichend, wenn der Arm-Unterstützungsmechanismus für Überkopfarbeiten eingesetzt wird, bei denen es nicht erforderlich ist, dass eine senkrechte Kraftwirkung des Arm-Unterstützungsmechanismus auf den Arm erfolgt, wenn der Arm sich nicht im Überkopfbereich befindet. Bei vielen Tätigkeiten ist eine Unterstützung nur in kleinen Winkelbereichen des Arms erforderlich. In derartigen Fällen kann es ausreichend sein, das beckenmodulseitige Ende in beschriebener Weise fest an der Schiene an einer geeigneten Position zu fixieren.

Insbesondere wenn eine Tätigkeit eine Unterstützung des Arms in einem größeren Winkelbereich erfordert, ist es vorteilhaft, wenn der Arm-Unterstützungsmechanismus außerdem eine Kraftausübungsvorrichtung aufweist, mit der eine Kraft auf das beckenmodulseitige Ende der beckenseitigen Verbindung ausübbar ist, mit welcher Kraft das beckenmodulseitige Ende der beckenseitigen Verbindung entlang der Schiene verschiebbar ist. Unter einer Kraftausübungsvorrichtung soll grundsätzlich jede Vorrichtung verstanden werden, mit der eine Kraft auf das beckenmodulseitige Ende ausübbar ist. Dabei braucht die Kraftausübungsvorrichtung nicht selbst ein Aktuator zu sein. Sie kann auch eine woanders, beispielsweise durch den Antrieb, erzeugte Kraft zum beckenmodulseitigen Ende umleiten. Mittels einer solchen Kraftausübungsvorrichtung kann das beckenmodulseitige Ende der beckenseitigen Verbindung in Abhängigkeit vom momentan vorliegenden Winkel des Arms an eine solche Stelle verschoben werden, dass die unterstützende Kraft möglichst senkrecht an dem Arm angreift. Auf diese Weise können die beschriebenen in Längsrichtung des Arms wirkenden Kräfte für größere Winkelbereiche des Arms vermieden werden.

Besonders bevorzugt kann es hierbei sein, wenn die Kraftausübungsvorrichtung ein parallel zur Schiene angeordnetes elastisches Element aufweist, beispielsweise eine Feder, die mit ihrer Federachse parallel zur Schiene angeordnet ist. Eine solche Feder kann beispielsweise eine Druckfeder oder eine Zugfeder sein. Eine geeignete Wahl einer Federkonstante dieser Feder kann dazu führen, dass das beckenmodulseitige Ende der beckenseitigen Verbindung für einen größeren Winkelbereich des Arms eine Position einnimmt, in der die an dem Arm angreifende Kraft sich in einem akzeptablen Bereich um die senkrechte Richtung zur Längsrichtung des Arms befindet, um dadurch die in Längsrichtung des Arms auftretenden Kraftkomponenten in einem hinreichend kleinen Rahmen zu halten.

In einer vorteilhaften Ausgestaltung der Erfindung kann die Kraftausübungsvorrichtung ein Zahnstangengetriebe aufweisen, das zum einen eine parallel zu der Schiene verlaufende Zahnstange und zum anderen zumindest ein am beckenmodulseitigen Ende der beckenseitigen Verbindung angeordnetes Verschiebungszahnrad aufweist, das in die Zahnstange eingreift. Über ein solches Zahnstangengetriebe ist eine Kraft auf das beckenmodulseitige Ende der beckenseitigen Verbindung ausübbar, mit der dieses entlang der Längsrichtung der Schiene verschiebbar ist.

Optional ist das Verschiebungszahnrad durch einen Verschiebungsantrieb zur Rotation antreibbar. Der Verschiebungsantrieb kann vorzugsweise wiederum ein aktiver Antrieb sein, der ein Drehmoment auf das Verschiebungszahnrad bewirken kann. Durch geeignetes Antreiben des Verschiebungszahnrads kann das beckenmodulseitige Ende der beckenseitigen Verbindung an eine geeignete Position entlang der Schiene verschoben werden, sodass die an dem Arm angreifende Kraft möglichst senkrecht an diesem angreift. Der Verschiebungsantrieb kann unmittelbar auf das Verschiebungszahnrad wirken, es ist jedoch vorteilhaft, wenn zwischen dem Verschiebungsantrieb und dem Verschiebungszahnrad ein Zahnradgetriebe angeordnet ist, das eine Übersetzung eines Drehmoments des Verschiebungsantriebs zum Verschiebungszahnrad bewirkt. Hierdurch kann zum einen der Antrieb schwächer und daher kleiner gestaltet werden und zum anderen kann die Präzision der Positionierung vergrößert werden.

In einer weiteren vorteilhaften Ausgestaltung der Erfindung kann der Arm-Unterstützungsmechanismus einen Zahnriemen aufweisen, der einerseits um ein Antriebszahnrad verläuft, das durch den Antrieb des Drehgelenks direkt oder über ein Zahnradgetriebe zur Rotation antreibbar ist, und der andererseits über ein Abtriebszahnrad verläuft, das mit dem Verschiebungszahnrad identisch ist oder mit dem Verschiebungszahnrad über ein Zahnradgetriebe verbunden ist. Auf diese Weise kann der Antrieb, der auch die Bewegung um das Drehgelenk antreibt, auch zum Antreiben des Verschiebungszahnrads verwendet werden. Dies ist möglich, da die Position, die das beckenmodulseitige Ende der beckenseitigen Verbindung auf der Schiene haben sollte, abhängig ist vom Winkel des Arms, also vom Winkel der beckenseitigen Verbindung und der armseitigen Verbindung um die Drehachse des Drehgelenks. Zwischen diesem Winkel und der günstigsten Position des beckenmodulseitigen Endes der beckenseitigen Verbindung auf der Schiene steht also ein eindeutiger Zusammenhang. Die Antriebskraft des Antriebs, der das Drehgelenk antreibt, kann also direkt verwendet werden, um auch die Position des beckenmodulseitigen Endes der beckenseitigen Verbindung auf der Schiene festzulegen. Hierdurch wird eine weitere Reduktion der Komplexität und des Gewichts des Arm-Unterstützungsmechanismus erreicht.

In einer vorteilhaften Ausgestaltung kann die Kraftausübungsvorrichtung auch ein Seilzugsystem aufweisen. Ein derartiges Seilzugsystem kann ein Seil aufweisen. Das Seil kann hierbei aus verschiedenen geeigneten Materialien gefertigt sein. Generell kann jede Struktur als Seil angesehen werden, die im Wesentlichen nur Zugkräfte überträgt. Auch ein Draht kann in diesem Sinne als Seil angesehen werden.

In dieser Ausgestaltung der Erfindung kann das Seil mit einem Seilende an einem Ende der Schiene befestigt sein und mit seinem anderen Seilende an der armseitigen Verbindung befestigt sein. Das Seilzugsystem kann dann eine Rolle, im Folgenden als Schienenrolle bezeichnet, aufweisen, die entlang der Schiene verschiebbar ist, und die über ein elastisches Element mit einem Ende der Schiene verbunden ist. Die Schienenrolle kann zum Beispiel auf einem Schlitten entlang der Schiene gleiten. Dieses elastische Element kann beispielsweise eine Feder sein. Ist diese Feder eine Zugfeder, so kann sie mit jenem Ende der Schiene verbunden sein, an dem nicht das Seil befestigt ist. Ist die Feder eine Druckfeder, kann sie mit jenem Ende der Schiene verbunden sein, an dem auch das Seil befestigt ist.

Das Seil kann dann von dem Ende der Schiene, an dem es befestigt ist, zu der Schienenrolle verlaufen. Es kann dann die Schienenrolle zumindest teilweise umlaufen, um hinter der Schienenrolle in Richtung des Drehgelenks weiterzuverlaufen. Dass das Seil die Schienenrolle zumindest teilweise umläuft, bedeutet, dass das Seil die Schienenrolle berührt und an der Schienenrolle nicht gerade verläuft. Letztlich kommt es darauf an, dass das Seil, das von jenem Ende der Schiene, wo es befestigt ist, zur Schienenrolle verläuft, hinter der Schienenrolle in Richtung des Drehgelenks verläuft.

Das Seil verläuft dann zumindest teilweise um die Drehachse des Drehgelenks herum zur armseitigen Verbindung. Das Drehgelenk kann hierzu vorzugsweise eine zur Drehgelenkachse koaxiale Rolle aufweisen, um die das Seil verläuft.

Vorzugsweise weist das Seilzugsystem außerdem eine Führungsrolle auf, um die das Seil zwischen der Schienenrolle und dem Drehgelenk zumindest teilweise herum verläuft. Hier ist es nicht erforderlich, dass das Seil diese Führungsrolle in jedem Zustand des Arm-Unterstützungsmechanismus berührt. Es kann ausreichend sein, dass die Führungsrolle lediglich einen Bereich begrenzt, in dem das Seil zwischen der Schienenrolle und dem Drehgelenk verläuft.

In einer vorteilhaften Ausgestaltung kann der Arm-Unterstützungsmechanismus einen Stützmechanismus aufweisen, über den die beckenseitige Verbindung mit dem Beckenmodul verbunden ist, wobei die vorstehend beschriebene Schiene eine Verschiebung des Stützmechanismus ermöglicht.

Der Stützmechanismus kann zwei oder mehr Schenkel aufweisen, die jeweils mit einem Ende am Beckenmodul angeordnet sind. Dabei sind die Enden der beiden Schenkel voneinander beabstandet am Beckenmodul angeordnet und zwar bevorzugt an Positionen, die in horizontaler und/oder vertikaler Richtung, gesehen, wenn der Benutzer den Arm-Unterstützungsmechanismus bestimmungsgemäß trägt und steht, unterschiedliche Positionen haben. Besonders vorteilhaft ist eine Anordnung, in der das Ende des einen Schenkels dorsal kranial bezüglich des Endes des anderen Schenkels angeordnet ist bzw. das Ende des anderen Schenkels ventral kaudal bezüglich des Endes des einen Schenkels angeordnet ist. Wenn der Benutzer steht, kann also das eine Ende hinten oben bezüglich des anderen Endes angeordnet sein, das bezüglich des einen Endes vorne unten angeordnet ist.

Vorteilhafterweise können die Schenkel jeweils über ein Dreh- oder Kugelgelenk am Beckenmodul angeordnet sein. Mit ihren jeweils anderen Enden können die Schenkel am beckenmodulseitigen Ende der beckenseitigen Verbindung angeordnet sein. Vorzugsweise treffen sich das beckenmodulseitige Ende der beckenseitigen Verbindung sowie die Enden der beiden Schenkel an einem gemeinsamen Angriffspunkt.

In dieser Ausgestaltung der Erfindung können die Schenkel nun so ausgestaltet sein, dass sie über einen flexiblen Zustand verfügen, in dem sie biegbar sind und über einen starren Zustand verfügen, in dem sie starr sind gegenüber Kräften, die in Richtung des am Beckenmodul angeordneten Endes des entsprechenden Schenkels wirken und/oder die mit einer Kraftkomponente in Richtung des beckenmodulseitigen Endes des entsprechenden Schenkels in einer zur Längsrichtung des Schenkels nicht parallelen Richtung an diesen angreifen. Die Schenkel können dann also starr sein gegen Kompression in Richtung ihrer Längsachse sowie Kräfte, die seitlich an den Schenkeln angreifen und vorzugsweise eine komprimierende Kraftrichtung haben. Die Schenkel können im starren Zustand aber auch gegen Kräfte in alle Richtungen starr sein.

Die Schenkel können vorteilhafterweise jeweils so ausgestaltet sein, dass ein erster der Schenkel starr ist und ein zweiter der Schenkel flexibel ist, wenn sich die armseitige Verbindung zur beckenseitigen Verbindung in einem ersten Winkelbereich um die Drehachse des Drehgelenks befindet, und dass der erste Schenkel flexibel und der zweite Schenkel starr ist, wenn sich die armseitige Verbindung zur beckenseitigen Verbindung in einem zweiten Winkelbereich um die Drehachse des Drehgelenks befindet, der von dem ersten Winkelbereich verschieden ist. Vorzugsweise überlappen sich der erste und der zweite Winkelbereich nicht, was jedoch optional ist. Vorzugsweise grenzen der erste und der zweite Winkelbereich unmittelbar aneinander, sodass in keinem Winkel der armseitigen Verbindung zur beckenseitigen Verbindung um die Drehgelenkachse beide Schenkel flexibel sind. Bevorzugterweise ist der erste Winkelbereich in Richtung des ersten Schenkels neben dem zweiten Winkelbereich angeordnet. Diese Richtung ist dabei jede Richtung, in der der erste Schenkel neben dem zweiten Schenkel angeordnet ist.

Die beschriebenen Schenkel können vorteilhafterweise eine Vielzahl von Blockierelementen aufweisen. Diese Blockierelemente können für jeden Schenkel jeweils auf einem Stützmechanismusseil aufgereiht sein. Die Schenkel können also jeweils ein Stützmechanismusseil sowie eine Mehrzahl an auf diesem aufgereihten Blockierelementen aufweisen. Die Blockierelemente können dann so ausgestaltet sein, dass sie eine Drehung benachbarter Blockierelemente um Drehachsen blockieren, die nicht parallel zum Stützmechanismusseil liegen, wenn die benachbarten Blockierelemente aneinander anliegen und/oder gegeneinandergedrückt werden. Die Blockierelemente können außerdem so ausgestaltet sein, dass sie eine solche Drehung nicht blockieren, wenn sie aneinander nicht anliegen und/oder nicht aneinandergedrückt werden. In diesem Fall kann die Flexibilität des Stützmechanismusseils erlauben, dass die Blockierelemente sich gegeneinander drehen können. Auf diese Weise befindet sich der entsprechende Schenkel in seinem starren Zustand, wenn die Blockierelemente aneinander anliegen und/oder gegeneinandergedrückt werden und in seinem flexiblen Zustand, wenn die Blockierelemente nicht aneinander anliegen.

Im einfachsten Fall können die Blockierelemente als Würfel oder Quader ausgestaltet sein, durch die das entsprechende Stützmechanismusseil hindurch verläuft. Eine größere Starrheit ist jedoch erzielbar, wenn die Blockierelemente so ausgestaltet sind, dass benachbarte Blockierelemente ineinander eingreifen, wenn sie auf dem Stützmechanismusseil aneinander anliegen. Besonders bevorzugt ist eine derartige Ausgestaltung der Blockierelemente, in der die Blockierelemente jeweils in einer Richtung entlang des entsprechenden Stützmechanismusseils eine konvexe, zum Beispiel kegelförmige, Oberfläche aufweisen und in entgegengesetzter Richtung entlang des entsprechenden Stützmechanismusseils eine konkave, zum Beispiel kegelförmige, Oberfläche aufweisen, die zur konvexen Oberfläche parallel liegt. Liegen dann die Blockierelemente aneinander an, so greift die konvexe Oberfläche des einen Blockierelements in die konkave kegelförmige Oberfläche des benachbarten Blockierelements ein. Hierdurch wird eine Drehung der beiden benachbarten Blockierelemente gegeneinander blockiert. Die konvexe Oberfläche kann auch als positive Oberfläche und die konkave Oberfläche als negative Oberfläche bezeichnet werden. Vorteilhafterweise sind die Blockierelemente, wenn sie aneinander anliegen, formschlüssig in alle Richtungen außer die eine Seilrichtung beim Lösen (und ggf. um die Rotationsachse des Seils wie zuvor beschrieben). Anstelle einer kegelförmigen Ausgestaltung sind auch Prismen, Pyramiden, Quader und andere möglich.

Befindet sich der Schenkel in seinem starren Zustand, liegen vorteilhafterweise alle Blockierelemente an ihren jeweils benachbarten Blockierelementen an. Hierbei ist es besonders bevorzugt, wenn die Blockierelemente mittels eine Kraft aneinandergedrückt werden. Im flexiblen Zustand müssen die Blockierelemente nicht aneinander anliegen und können voneinander beabstandet sein. Wenn sie aneinander anliegen, so werden sie im flexiblen Zustand jedoch nicht durch eine Kraft gegeneinandergedrückt.

Jener Druck, mit dem die Blockierelemente zur Erzielung des starren Zustand des entsprechenden Schenkels gegeneinandergedrückt werden, kann vorteilhafterweise durch das beckenmodulseitige Ende der beckenseitigen Verbindung auf die Schenkel ausgeübt werden. Hierzu ist es vorteilhaft, wenn die Stützmechanismusseile der beiden Schenkel jeweils mit einem Ende an jenem Ende des entsprechenden Schenkels befestigt sind, mit dem dieser Schenkel am Beckenmodul befestigt ist, dann durch den Schenkel hindurch verlaufen und durch die beckenseitige Verbindung zum Antrieb verlaufen. Auf diese Weise kann der Antrieb eingesetzt werden, um die Stützmechanismusseile zu spannen. Durch das Spannen der Stützmechanismusseile werden die Blockierelemente in Richtung der Befestigungspunkte der Schenkel am Beckenmodul gedrückt und blockieren auf diese Weise, sodass der Schenkel in den starren Zustand übergeht. Wird andererseits die Spannung des Stützmechanismusseils gelockert, fällt diese Kraft weg und die Blockierelemente werden nicht mehr gegeneinandergedrückt. Der Schenkel geht in den flexiblen Zustand über.

Vorteilhafterweise kann der Arm-Unterstützungsmechanismus eine Seilzugrolle aufweisen, die koaxial zum Antrieb angeordnet ist und durch den Antrieb zur Rotation antreibbar ist. Mit jenen Enden, mit denen die Stützmechanismusseite nicht am beckenmodulseitigen Ende der Schenkel befestigt sind, können diese dann an der Seilzugrolle befestigt sein. Dabei umlaufen die Stützmechanismusseile der beiden Schenkel die Drehachse der Seilzugrolle vorzugsweise in entgegengesetzter Richtung zumindest teilweise.

Es sei angemerkt, dass hier nicht erforderlich ist, dass die Stützmechanismusseile an der Seilzugrolle ihre Richtung ändern. Wichtig ist nur, dass die Stützmechanismusseile nicht in jeder Position der Seilzugrolle unmittelbar in Richtung der Drehachse der Seilzugrolle verlaufen. Umlaufen kann also so definiert werden, dass unterschiedliche Punkte der Stützmechanismusseile jeweils in unterschiedlichem Winkel um die Drehachse der Seilzugrolle stehen und dabei so an der Seilzugrolle angeordnet sind, dass diese stets ein Stück eines Stützmechanismusseils freigibt, wenn sie am anderen zieht.

In vielen Fällen reicht es aus, an den Stützmechanismusseilen nur ein relativ kleines Stück zu ziehen, um die entsprechenden Schenkel in ihren starren bzw. flexiblen Zustand zu versetzen. Um die Freiheit der Drehbewegung der armseitigen Verbindung um die Drehgelenkachse nicht auf dieses relativ kleine Stück einzuschränken, kann die Seilzugrolle mit dem Antrieb über eine Kupplung, beispielsweise eine Rutschkupplung, verbunden sein. Diese kann dann ein Anziehen des entsprechenden Stützmechanismusseils so weit erlauben, bis der entsprechende Schenkel in den starren Zustand übergeht, und kann dann aber eine weitere Bewegung der armseitigen Verbindung ermöglichen.

Eine andere vorteilhafte Möglichkeit, ein Anziehen bzw. Freigeben der Stützmechanismusseile zu bewirken, ist es, die Stützmechanismusseile wiederum mit einem Ende an jenem Ende des entsprechenden Schenkels zu befestigen, mit dem dieser Schenkel am Beckenmodul befestigt ist und mit ihrem anderen Ende an jeweils einem Verfolger zu befestigen, der auf einer Bahn einer Kurvenscheibe verschiebbar ist. Die Kurvenscheibe kann dann um eine Kurvenscheibendrehachse drehbar sein. Dabei wird vorzugsweise eine Position des Verfolgers in Umfangsrichtung um die Kurvenscheibendrehachse konstant gehalten. Wird nun die Kurvenscheibe gedreht, folgt der Verfolger der Bahn. Die Bahn kann nun so ausgestaltet sein, dass sie Abschnitte unterschiedlichen Abstands von der Kurvenscheibendrehachse aufweist. Wird also die Kurvenscheibe gedreht und folgt der Verfolger der Bahn, so ändert der Verfolger seinen Abstand zur Kurvenscheibendrehachse. Wird die Position des Verfolgers in Umfangsrichtung festgehalten, so ändert der Verfolger seine Position lediglich in radialer Richtung. Hierdurch zieht er an dem entsprechenden Stützmechanismusseil, das an ihm befestigt ist.

Die Kurvenscheibe kann außerdem ein Umlenkelement aufweisen, das beispielsweise eine Rolle oder ein Stift sein kann. Dieses Umlenkelement kann parallel oder koaxial zur Kurvenscheibendrehachse auf jener Seite der Kurvenscheibe stehen, auf der der Verfolger angeordnet ist. Hierdurch kann das entsprechende Stützmechanismusseil zumindest teilweise um das Umlenkelement, vorzugsweise dieses berührend, verlaufen, wenn der Verfolger eine geeignete Position hat. Es sei angemerkt, dass nicht zwingend erforderlich ist, dass das Stützmechanismusseil die Umlenkrolle in jeder Position der Seilzugrolle berührt.

In einer vorteilhaften Ausgestaltung der Erfindung kann der Armangriff an der armseitigen Verbindung über ein Gelenk angeordnet sein, beispielsweise ein Kardangelenk, ein Scharniergelenk oder ein Kugelgelenk. Auf diese Weise kann vermieden werden, dass Drehmomente auf den Arm ausgeübt werden, die um eine Achse wirken, die nicht die Drehgelenkachse ist.

Vorteilhafterweise kann das Beckenmodul mit der beckenseitigen Verbindung über ein Gelenk verbunden sein, das wiederum beispielsweise ein Kardangelenk, ein Scharniergelenk oder ein Kugelgelenk sein kann. Hierdurch kann vermieden werden, dass Drehmomente auf das Beckenmodul ausgeübt werden, die nicht um die Drehgelenkachse wirken.

Die folgenden Kombinationen von Gelenken sind besonders vorteilhaft:
In einer ersten Kombination kann die armseitige Verbindung über ein Dreh- oder Kardangelenk mit dem Armangriff verbunden sind und es kann die beckenseitige Verbindung über ein Kardan- oder Kugelgelenk mit dem Beckenmodul verbunden sein. Der Mechanismus mit den so spezifizierten Gelenken bewirkt eine hohe biomechanische Wirksamkeit durch vorteilhafte Kraftrichtungen sowohl hüft- als auch armseitig (möglichst senkrecht zum Oberarmknochen (Humerus) bei keinen oder nur geringen Interaktionsmomenten. Trotzdem bleibt eine optimale Bewegungsfreiheit und kinematische Kompatibilität zur anatomischen Armbewegung erhalten.

In einer zweiten vorteilhaften Kombination kann zusätzlich vorgenannten ersten Kombination eine passive Schiene wie oben beschrieben zum Einsatz kommen. In Kombination mit der passiven Schiene kann die Wirkrichtung über die Positionierung des hüftseitigen Gelenkes anwendungsoptimiert mit fließendem Übergang eingestellt werden: Kraftangriffspunkt Hüfte: ventral - kaudal für vertikales Schieben und Ziehen (z.B. Überkopfarbeiten in Produktion oder Handwerk), Kraftangriffspunkt Hüfte: dorsal - kranial für horizontales Schieben und Ziehen (z.B. Umbetten von Patienten oder Drücken und Ziehen in Produktion und Logistik)
In einer dritten vorteilhaften Kombination kann zusätzlich zur zweiten Kombination eine Kraftausübungsvorrichtung für Verschiebung des hüftmodulseitigen Endes des Mechanismus auf der Schiene zum Einsatz kommen. Mit der Kraftausübungsvorrichtung an der Schiene kann die Positionierung des hüftseitigen Gelenkes während der Bewegung entsprechend dem aktuellen menschlichen Armwinkel eingestellt/angepasst werden (Übergang zwischen biomechanisch ideal horizontaler und vertikaler Bewegungsunterstützung).

In einer vorteilhaften Ausgestaltung der Erfindung kann der Arm-Unterstützungsmechanismus einen Anschlag aufweisen, der einen Bewegungswinkelbereich des Gelenkes, über das das Beckenmodul mit der beckenseitigen Verbindung verbunden ist, begrenzt, wobei vorzugsweise der Anschlag zur Einstellung des Bewegungswinkelbereichs verschiebbar oder verdrehbar ist. Der Anschlag kann zum Beispiel am Beckenmodul angeordnet sein. Durch einen solchen Anschlag ist es möglich, dass der Mechanismus in Endanschlagstellung störenden Momente aufnimmt bzw. kompensiert, die zum Beispiel durch das Eigengewicht des Antriebs entstehen können.

Im Folgenden soll die Erfindung anhand einiger Figuren beispielhaft erläutert werden. Die in den Beispielen beschriebenen Merkmale können auch unabhängig vom konkreten Beispiel realisiert sein und zwischen den Beispielen kombiniert werden. Gleiche Bezugszeichen kennzeichnen gleiche oder entsprechende Merkmale.

Es zeigt
- Figur 1: einen erfindungsgemäßen Arm-Unterstützungsmechanismus,
- Figur 2A bis 2C: einen erfindungsgemäßen Arm-Unterstützungsmechanismus bei unterschiedlicher Position des Arms,
- Figur 3A bis 3C: beispielhafte Ausgestaltungen eines erfindungsgemäßen Arm-Unterstützungsmechanismus mit einer Schiene,
- Figur 4: einen Arm-Unterstützungsmechanismus mit einem Seilzugsystem,
- Figur 5A bis 5B: einen Arm-Unterstützungsmechanismus mit einem Stützmechanismus,
- Figur 6A und 6B: eine mögliche Ausgestaltung eines Schenkels im Stützmechanismus,
- Figur 7: einen Mechanismus zum Spannen eines Stützmechanismusseils mit einer Rutschkupplung und
- Figur 8: einen Mechanismus zum Spannen eines Stützmechanismusseils mit einer Kurvenscheibe.

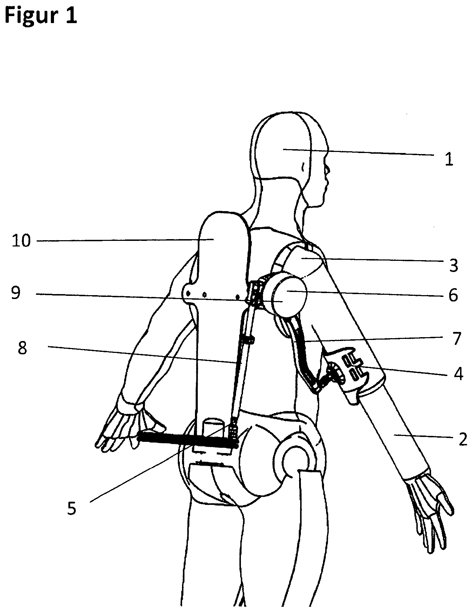

Figur 1 zeigt ein Beispiel eines erfindungsgemäßen Arm-Unterstützungsmechanismus zur Bewegung eines Arms 2 eines Benutzers 1 um einen Schulterkomplex 3 des Benutzers. Der Arm-Unterstützungsmechanismus weist einen Armangriff 4 auf, der eingerichtet ist, an dem Arm 2 des Benutzers anzugreifen. Der Arm-Unterstützungsmechanismus weist außerdem ein Beckenmodul 5 auf, das eingerichtet ist, an einer Hüfte bzw. einem Becken des Benutzers 1 anzugreifen. Darüber hinaus weist der Arm-Unterstützungsmechanismus ein Drehgelenk 6 auf sowie eine armseitige Verbindung 7, die mit einem armangriffsseitigen Ende am Armangriff 4 angeordnet ist und mit einem drehgelenkseitigen Ende am Drehgelenk 6 angeordnet ist. Der Arm-Unterstützungsmechanismus weist außerdem eine beckenseitige Verbindung 8 auf, die mit einem beckenmodulseitigen Ende an einer Verstell-Einheit eines Beckenmoduzls 5 verschiebbar angeordnet ist und mit ihrem entgegengesetzten Ende am Drehgelenk 6 angeordnet ist. Im gezeigten Beispiel weist der Arm-Unterstützungsmechanismus außerdem einen vorzugsweise aktiven Antrieb 9 auf, der hier mit dem Drehgelenk integriert ist und der eingerichtet ist, das Drehgelenk 6 um eine Drehachse des Drehgelenks 6 anzutreiben. Das Drehgelenk 6 ist eingerichtet, die armseitige Verbindung 7 und die beckenseitige Verbindung 8 um die Drehachse des Drehgelenks 6 gegeneinander zu bewegen. Der Armangriff 4 ist hier als Oberarmschale ausgestaltet, die konkav ist und in die der Arm 2 einlegbar ist. Der Armangriff 4 greift dabei am Oberarm des Benutzers 1 an. Die beckenseitige Verbindung 8 ist im gezeigten Beispiel als Teleskopstange ausgestaltet, sodass ihre Länge veränderbar ist. Auf diese Weise kann der Abstand zwischen dem Beckenmodul 5 und dem Drehgelenk 6 an die Größe des Benutzers 1 angepasst werden. Im in Figur 1 gezeigten Beispiel weist das Beckenmodul 5 außerdem eine Rückenmodul 10 auf, die in getragenem Zustand parallel zum Rücken des Benutzers 1 liegt.

Das Rückenmodul 10 ist möglich aber nicht zwingend notwendig.

Es kann der gleichmäßigen Ableitung der Kräfte durch den Mechanismus auf den gesamten Rumpf des Trägers dienen. Das Rückenmodul 10 kann durch ein Gurtsystem am Rumpf fixiert sein (zum Beispiel wie ein Wanderrucksack).

Das Rückenmodul 10 sorgt in seiner Ausgestaltung kombiniert flexibel und starr für eine optimale Kraftableitung in den Rumpf des Trägers.

Der Antrieb 9 ist im gezeigten Beispiel ein aktiver Drehantrieb, dessen Drehachse parallel liegt oder koaxial ist zur Drehachse des Drehgelenks 6.

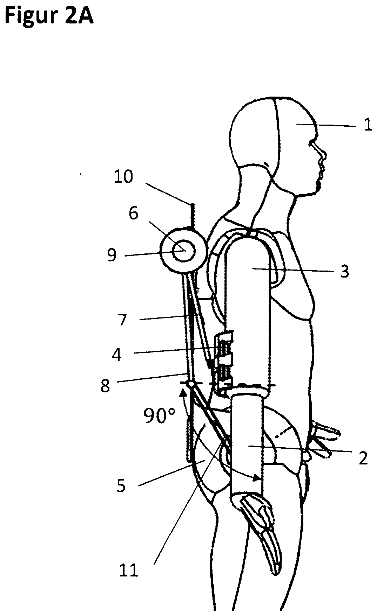

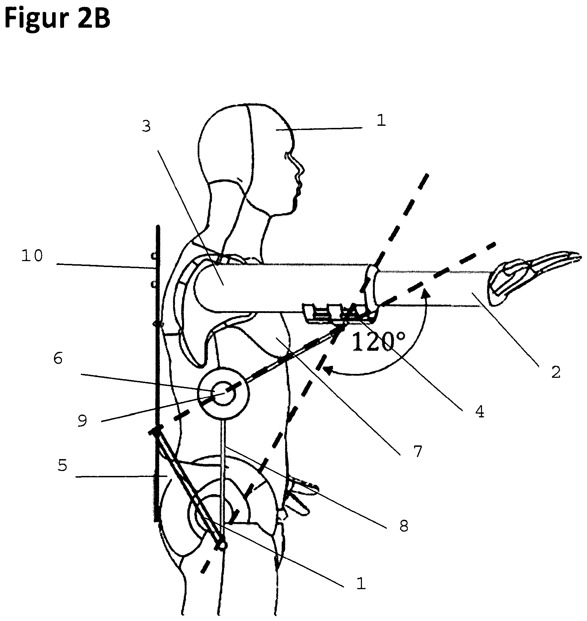

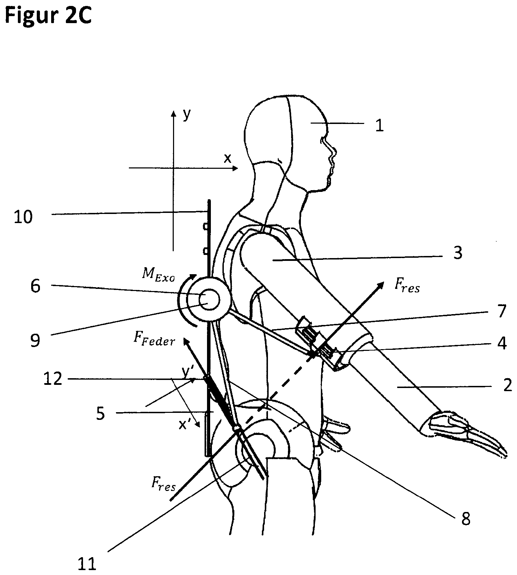

Figuren 2A, 2B und 2C zeigen in einer Seitenansicht einen durch einen Benutzer 1 getragenen Arm-Unterstützungsmechanismus entsprechend einem Beispiel der Erfindung, in dem die Verstell-Einheit des Beckenmoduls 5 eine Schiene 11 aufweist, die hier von dorsal kranial nach ventral kaudal verläuft. Das beckenmodulseitige Ende der beckenseitigen Verbindung 8 ist auf dieser Schiene 11 verschiebbar ausgestaltet. In Figur 2A verläuft der Arm 2 des Benutzers 1 parallel zur Körperachse. In Figur 2B ist der Arm 2 senkrecht zur Körperachse des Benutzers 1 nach vorne ausgestreckt. Figur 2C zeigt einen Zustand zwischen jenem der Figur 2A und der Figur 2B. Im in Figur 2C gezeigten Beispiel weist die Schiene außerdem eine zusätzliche Feder 12 auf, die eine Kraft nach hinten oben ausübt.

In Figur 2A ist zu erkennen, dass, wenn der Arm-Unterstützungsmechanismus auf den parallel zur Körperachse nach unten gerichteten Arm 2 wirkt, die ausgeübte Kraft von dem Armangriff 4 im Wesentlichen senkrecht zur Längsachse des Arms 2 auf diesen ausgeübt wird. Hierzu ist das beckenmodulseitige Ende der beckenseitigen Verbindung 8 am hinteren oberen Ende, also am dorsal kranialen Ende der Schiene 11 platziert.

In Figur 2B ist das beckenmodulseitige Ende der beckenseitigen Verbindung 8 am vorderen unteren Ende, also am ventral kaudalen Ende der Schiene 11, angeordnet. Zu erkennen ist, dass die Kraft in diesem Zustand aufgrund der begrenzten Länge der Schiene 11 zwar nicht genau senkrecht zur Längsrichtung des Arms 2 an diesem angreift, jedoch ist der Angriffswinkel näher an der Senkrechten als er es wäre, wenn das beckenmodulseitige Ende der beckenseitigen Verbindung 8 am hinteren oberen Ende der Schiene 11 angeordnet wäre.

In den Figuren 2A und 2B kann das beckenmodulseitige Ende der beckenseitigen Verbindung 8 im einfachsten Fall beispielsweise manuell an der Schiene 11 fixierbar sein. Die Schiene 11 kann gerade verlaufen oder einen zweidimensional in einer Ebene oder dreidimensional räumlich gekrümmten Kurvenverlauf aufweisen. Die Fixierung des beckenmodulseitigen Endes der beckenseitigen Verbindung 8 kann beispielsweise mittels eines Schnellspannmechanismus erfolgen und auf die jeweilige Anwendung und die Träger angepasst werden. So können beispielsweise Schiebetätigkeiten besser unterstützt werden, indem der Kraftangriffspunkt in der Schiene 11 hinten oben gewählt wird. Hebetätigkeiten werden durch Fixierung des Kraftangriffspunktes vorne unten in der Schiene 11 besser unterstützt. Zur Fixierung können beispielsweise Schnellspanner, Drehrädchen, Klemmen, Klemmschrauben und andere wie beispielsweise Bolzen und Schnapphaken verwendet werden. Derartige Fixierungen erlauben es, den Arm-Unterstützungsmechanismus für spezifische Tätigkeiten, wie z. B. die Tätigkeit "Ziehen/Schieben" mit Angriffspunkt im Bereich des Rückens und für "Heben/Tragen" mit Kraftangriffspunkt im Bereich des vorderen Beckens oder der vorderen Hüfte vorzubereiten.

Im in Figur 2C gezeigten Beispiel befindet sich der Arm des Benutzers 1 in einer Zwischenposition zwischen den in Figur 2A und 2B gezeigten Positionen. Im in Figur 2C gezeigten Beispiel weist die Schiene 11 außerdem eine Feder 12 auf, die vom hinteren oberen Ende der Schiene bis zum beckenmodulseitigen Ende der beckenseitigen Verbindung 8 verläuft und eine Kraft auf diese ausübt. Die Federkraft F_{Feder} wirkt hier parallel zur Längsrichtung der Schiene 11 nach hinten oben. Übt nun der Antrieb 9 ein Drehmoment M_{Exo} aus, so übt die armseitige Verbindung 7 eine resultierende Kraft Fᵣₑₛ auf den Arm 2 aus. Diese resultierende Kraft Fᵣₑₛ wirkt im Wesentlichen senkrecht auf die Längsrichtung des Arms 2.

Die in Figur 2C zum Einsatz kommende Feder kann den Angriffspunkt des beckenmodulseitigen Endes der beckenseitigen Verbindung 8 nach unten vorne drücken. Zu Beginn der Bewegung, wenn der Arm 2 parallel zur Körperachse verläuft, ist der Anteil des Kraftvektors des Anbringungspunktes nach hinten verhältnismäßig groß. Der Punkt verschiebt sich nach hinten oben. Während der Bewegung des beckenmodulseitigen Endes der beckenseitigen Verbindung 8 von hinten oben nach vorne unten in der Schiene 11 wird der Anteil der Kraft nach hinten immer kleiner, die Feder kann nun den Punkt immer weiter nach vorne drücken, bis dieser ganz vorne angekommen ist. Der Kraftangriffswinkel zwischen Arm 2 und Armeingriff 4 bleibt dadurch immer nahezu senkrecht.

Die in Figur 2C gezeigte Feder 12 wird vorzugsweise mit einer Federkonstanten so gewählt, dass die in der Feder 12 entstehenden Zugkräfte in Richtung und Größe den Längskräften zwischen Arm 2 und Armangriff 4 zu jeder Zeit entgegenwirken. Diese Lösung reduziert Zwangskräfte, was den Komfort und die Nutzerakzeptanz erhöht.

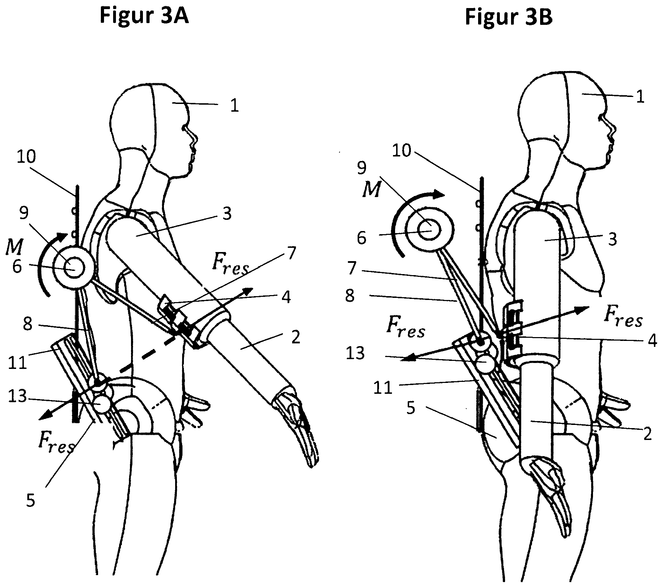

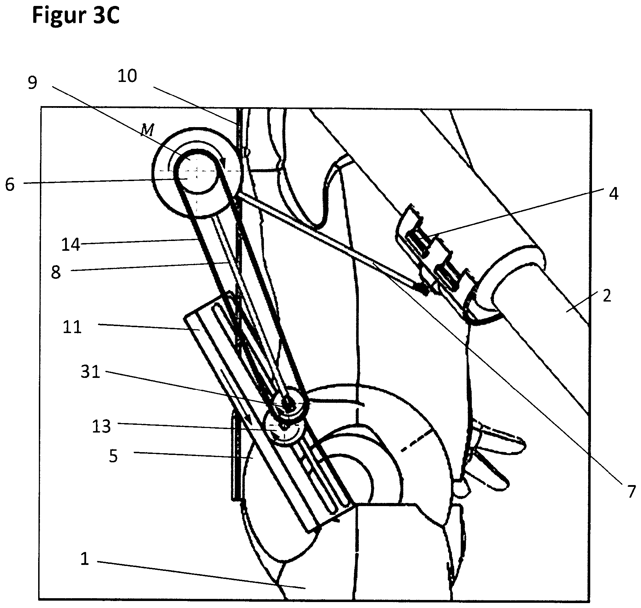

Figuren 3A, 3B und 3C zeigen eine beispielhafte Ausgestaltung eines erfindungsgemäßen Arm-Unterstützungsmechanismus, bei dem eine Kraftausübungsvorrichtung 13 vorgesehen ist, mit der eine Kraft auf das beckenmodulseitige Ende der beckenseitigen Verbindung 8 ausübbar ist, mit der das beckenmodulseitige Ende der beckenseitigen Verbindung 8 entlang der Schiene 11 verschiebbar ist. Die Kraftausübungsvorrichtung 13 ist dem in den Figuren 3A, 3B und 3C gezeigten Beispiel als Zahnstangengetriebe 13 ausgestaltet, das eine parallel zur Schiene 11 verlaufende Zahnstange (nicht gezeigt) und ein am beckenmodulseitigen Ende der beckenseitigen Verbindung 8 angeordnetes Verschiebungszahnrad 13 aufweist, das in die Zahnstange eingreift.

In den Figuren 3A und 3B wird das Verschiebungszahnrad 13 durch einen eigenen Antrieb zur Rotation angetrieben. In Figur 3B verläuft der Arm 2 des Benutzers 1 parallel zu dessen Körperachse senkrecht nach unten. In Figur 3A ist der Arm 2 um ca. 45° angewinkelt. Auch in den Figuren 3A und 3B ist der Effekt der Verschiebung des beckenmodulseitigen Endes der beckenseitigen Verbindung 8 entlang der Schiene zu erkennen. Im in Figur 3B gezeigten Beispiel ist das beckenmodulseitige Ende der beckenseitigen Verbindung am hinteren oberen Ende der Schiene 11 angeordnet. Dadurch wird auf den Arm eine resultierende Kraft Fᵣₑₛ ausgeübt, die hinreichend dicht an einer Richtung senkrecht zur Längsrichtung des Armes 2 an diesem angreift. Bewegt nun der Nutzer 1 seinen Arm 2 nach vorne, so verfährt das beckenmodulseitige Ende der beckenseitigen Verbindung 8 mittels des Verschiebungszahnrads 13 auf der Schiene 11 nach unten vorne. Hierdurch wird erreicht, dass auch im angewinkelten Zustand des Armes die resultierende Kraft Fᵣₑₛ im Wesentlichen senkrecht zur Längsrichtung des Armes 2 wirkt.

Figur 3C zeigt eine Konfiguration wie die Figuren 3A und 3B, wobei jedoch das Verschiebungszahnrad 13 nicht mittels eines eigenen Antriebs angetrieben wird, sondern mittels des Antriebs 9, der das Drehgelenk 6 antreibt. Das Drehmoment M wird vom Antrieb 9 über einen Zahnriemen 14 auf ein Zahnrad 31 übertragen, das das Verschiebungszahnrad 13 zur Rotation antreibt. Eine Ausübung des Drehmoments M mittels des Antriebs 9 bewirkt also gleichzeitig eine Kraft auf den Arm 2 und die geeignete Verschiebung des beckenmodulseitigen Endes der beckenseitigen Verbindung 8, so dass die resultierende Kraft Fᵣₑₛ möglichst senkrecht zur Längsrichtung des Armes am Arm angreift. Im in Figur 3C gezeigten Beispiel verläuft der Zahnriemen 14 auf Seiten des Antriebs 9 um ein Zahnrad, das koaxial zur Drehachse des Drehgelenks 6 liegt und durch den Antrieb 9 angetrieben wird.

Im in Figur 3A bis 3C gezeigten Beispiel kann ein Übersetzungsmechanismus vorgesehen sein, der das Drehmoment des Antriebs 9 oder des für das Verschiebungszahnrad 13 vorgesehenen Antriebs über eine oder mehrere Übersetzungen auf das Verschiebungszahnrad 13 überträgt. Im gezeigten Beispiel wurde diese Übersetzung mit insgesamt fünf Zahnrädern realisiert. Auf diese Weise kann auf dem letzten Zahnrad 13 eine sehr viel höhere Drehzahl erreicht werden. Dieses Verschiebungszahnrad 13 steht im Eingriff mit der Zahnstange, an welcher entlang sich das Verschiebungszahnrad 13 als Folge verschiebt. Das beckenmodulseitige Ende der beckenseitigen Verbindung 8 bewegt sich während der Bewegung des Antriebs also genau definiert entlang der Schiene 11 von hinten oben nach vorne unten. Durch die in Figur 3C gezeigten Keilriemen oder Zahnriemen 14 können auch Getriebestufen eingespart werden.

Ein großer Vorteil der in Figuren 2 und 3 gezeigten Armunterstützungsmechanismen liegt im optimierten Kraftangriffswinkel am Arm 2, wobei gleichzeitig auf eine rigide, mehrgelenkige Struktur um die Schulter verzichtet werden kann. Der Kraftangriffswinkel der vom Arm-Unterstützungsmechanismus übertragenen Kraft soll am Arm 2, in den gezeigten Beispielen am Oberarm, möglichst immer senkrecht zum Oberarm sein. Bei einem fixierten Gelenk am Beckenmodul 5 ist der Winkel zu Beginn der Bewegung, wo der Arm 2 parallel zur Körperachse nach unten hängt, nahezu senkrecht, verändert sich jedoch leicht im Laufe der Vorwärtsbewegung des Armes 2 in eine Schiebebewegung. Dieser Effekt wird bei Hebetätigkeiten bis auf oder über Schulterhöhe noch größer, wodurch größere Anteile des Kraftvektors an der Armanbindung 4 parallel zum Arm 2 wirken. Diese Kraftanteile werden dann nicht mehr zum Heben des Armes 2 verwendet und bringen unvorteilhafte Kräfte in Armlängsrichtung ein, die zu einer Verschiebung der Anbindung 4 oder zu schmerzhaften Scherkräften führen können. Die in den hier beschriebenen Beispielen gezeigten Mechanismen bewirken eine Reduzierung dieser unerwünschten Kräfte parallel zur Armlängsrichtung.

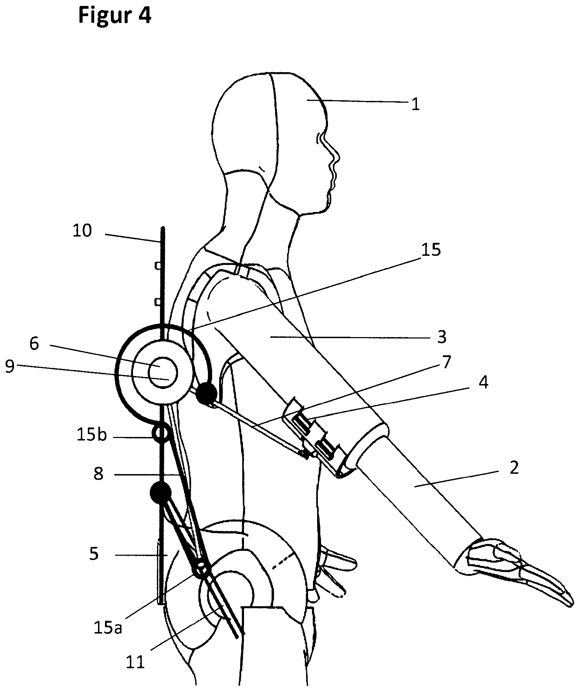

Figur 4 zeigt ein weiteres Beispiel eines erfindungsgemäßen Arm-Unterstützungsmechanismus, bei dem wie in den Figuren 2 und 3 das beckenmodulseitige Ende der beckenseitigen Verbindung 8 entlang einer Schiene 11 verschiebbar ist. Das zur Ausgestaltung und Verlauf der Schiene 11 in den Figuren 2 und 3 Gesagte soll auch für Figur 4 gelten. Im in Figur 4 gezeigten Beispiel ist die Kraftausübungsvorrichtung mittels eines Seilzugsystems ausgestaltet. Dieses Seilzugsystem weist ein Seil 15 auf, das mit einem Seilende an einem Ende der Schiene 11, hier dem hinteren oberen Ende befestigt ist, und das mit einem anderen Seilende an der armseitigen Verbindung 7 befestigt ist. Das Seilsystem 15 weist eine Schienenrolle 15a auf, die entlang der Schiene 11 verschiebbar ist, und die über ein elastisches Element, beispielsweise eine Feder, mit einem Ende der Schiene 11 verbunden ist. Ist die Feder eine Zugfeder, so ist sie hier mit jenem Ende der Schiene 11 verbunden, an dem nicht das Seil befestigt ist. Im Fall einer Druckfeder ist diese an jenem Ende der Schiene 11 verbunden, an dem auch das Seil 15 befestigt ist. Im gezeigten Beispiel weist das Seilzugsystem außerdem eine optionale Führungsrolle 15b auf, um die das Seil 15 zwischen der Schienenrolle 15a und dem Drehgelenk 6 zumindest teilweise herum verläuft. Das Seil des Seilzugmechanismus verläuft dann von dem Ende der Schiene 11, an dem das Seil 15 befestigt ist, um die Schienenrolle 15a herum in Richtung des Drehgelenks 6, dann um die optionale Führungsrolle 15b, anschließend um das Drehgelenk 6 zum Befestigungspunkt an der armseitigen Verbindung 7. Das Seil 15 kann um das Drehgelenk 6 und den Antrieb 9 herumgeführt werden, beispielsweise über eine oder mehrere Rollen oder Seilwinden. Bei einem kleinen Winkel zwischen der beckenseitigen und der armseitigen Verbindung ist das aufgewickelte Seil 15 hier maximal lang und es bleibt wenig Seil 15 zur Schiene 11 hin. Der Kraftangriffspunkt wird daher nach oben hinten in der Schiene 11 gezwungen. Wird der Arm nach oben bewegt (Schulter-Flexion), so wird der Winkel zwischen der armseitigen Verbindung und der beckenseitigen Verbindung größer. In der Folge wird das Seil 15 freigegeben und der Kraftangriffspunkt rutscht in der Schiene 11 freiwillig oder durch zusätzliche Federkraft weiter nach vorne unten.

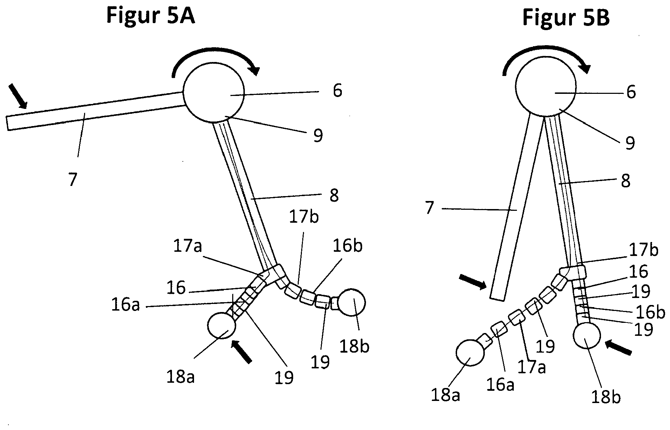

Figur 5 zeigt eine Ausgestaltung eines erfindungsgemäßen Arm-Unterstützungsmechanismus, der in nicht erfindungsgemäßer Weise auch ohne eine Schiene 11 auskommt. Im in Figur 5 gezeigten Beispiel weist der Arm-Unterstützungsmechanismus einen Stützmechanismus 16 auf, über den die beckenseitige Verbindung mit 8 mit dem Beckenmodul 5 verbunden ist. Der Übersichtlichkeit halber sind in Figur 5 nur die armseitige Verbindung 7, die beckenseitige Verbindung 8, das Drehgelenk 6 mit Antrieb 9 sowie der Stützmechanismus 16 gezeigt. Der Stützmechanismus 16 weist zwei oder mehr Schenkel 16a und 16b auf, die jeweils mit einem Ende an Befestigungspunkten 18a bzw. 18b am Beckenmodul 5 befestigt sind. Die Befestigungspunkte 18a und 18b liegen vorzugsweise dorsal kranial und ventral kaudal zueinander. Beispielsweise können die Angriffspunkte 18a und 18b an Punkten am Beckenmodul 5 angreifen, an denen in den anderen Beispielen der Figuren 2 bis 4 die Schiene 11 entlang verläuft.

Die Schenkel 16a und 16b sind jeweils so ausgestaltet, dass sie zwischen einem starren und einen flexiblen Zustand wechseln können. In Figur 5A ist der Schenkel 16a in einem starren Zustand und der Schenkel 16b in einem flexiblen Zustand. In Figur 5B ist hingegen der Schenkel 16a in flexiblem Zustand und der Schenkel 16b im starren Zustand. Vorzugsweise sind die Schenkel 16a, 16b so ausgestaltet, dass immer einer der Schenkel 16a, 16b starr ist, während der andere Schenkel 16a, 16b flexibel ist. Nicht ausgeschlossen werden muss, dass beide Schenkel 16a und 16b starr sind, jedoch sollten nicht beide Schenkel 16a und 16b gleichzeitig flexibel sein.

Ob die Schenkel 16a und 16b starr oder flexibel sind, hängt in Figur 15 davon ab, in welchem Winkel die armseitige Verbindung 7 zur beckenseitigen Verbindung 8 steht. In einem ersten Winkelbereich um die Drehachse des Drehgelenks 6 zwischen armseitiger Verbindung 7 und beckenseitiger Verbindung 8 soll der erste Schenkel 16a starr und der zweite Schenkel 16b flexibel sein. Dieses Beispiel ist in Figur 5A gezeigt. Befindet sich die armseitige Verbindung 7 zur beckenseitigen Verbindung 8 in einem zweiten Winkelbereich, der vom ersten Winkelbereich verschieden ist, so ist der erste Schenkel 16a flexibel und der zweite Schenkel 16b starr. Dies ist in Figur 5B gezeigt. Der erste Winkelbereich ist in Richtung des ersten Schenkels 16a neben dem zweiten Winkelbereich angeordnet. Das bedeutet, dass, wenn sich die armseitige Verbindung 7 weiter in Richtung des ersten Schenkels 16a befindet, dieser starr ist, während wenn die armseitige Verbindung 7 sich in Richtung des zweiten Schenkels 16b bewegt, dieser starr wird.

Im in Figur 5 gezeigten Beispiel weisen die Schenkel 16a und 16b jeweils eine Vielzahl von Blockierelementen 19 auf, die für jeden Schenkel 16a, 16b jeweils auf einem Stützmechanismusseil 17a bzw. 17b aufgereiht sind. Die Blockierelemente 19 sind so ausgestaltet, dass sie eine Drehung benachbarter Blockierelemente 19 um zum Stützmechanismusseil 17a bzw. 17b nicht parallele Drehachsen blockieren, wenn die benachbarten Blockierelemente 19 aneinander gedrückt werden.

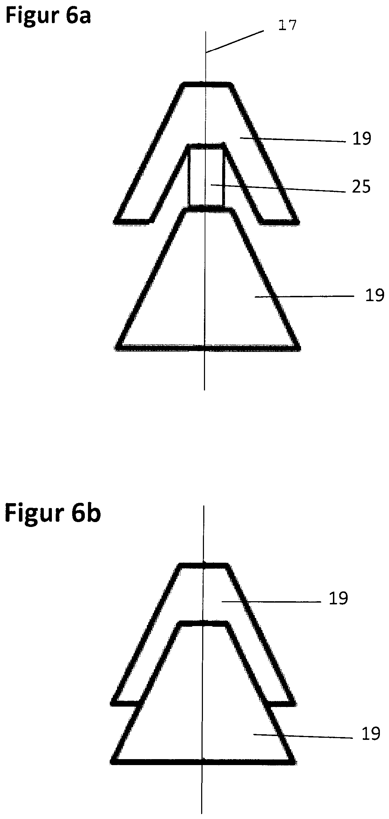

Im einfachsten Fall können die Blockierelemente 19 als Quader oder Würfel realisiert sein, wie dies in Figur 5A und 5B angedeutet ist. Vorteilhaft ist jedoch eine Ausgestaltung wie in Figur 6 beispielhaft gezeigt. In Figur 6 sind die Blockierelemente 19 so ausgestaltet, dass benachbarte Blockierelemente 19 ineinander eingreifen, wenn sie auf dem Stützmechanismusseil 17 aneinander anliegen. In Figur 6A liegen die zwei gezeigten Blockierelemente 19 nicht aneinander an, so dass der entsprechende Schenkel flexibel ist. Im in Figur 6B gezeigten Beispiel greifen die Blockierelemente 19 ineinander ein, so dass der entsprechende Schenkel starr ist. Die Blockierelemente können, wie in Figur 6 angedeutet, jeweils in einer Richtung entlang des entsprechenden Stützmechanismusseils eine konvexe, zum Beispiel kegelförmige, Oberfläche aufweisen. In entgegengesetzter Richtung entlang des entsprechenden Stützmechanismusseils 17 können sie eine konkave, zum Beispiel kegelförmige, Oberfläche aufweisen, die zur konvexen kegelförmigen Oberfläche parallel liegt. Auf diese Weise kann jeweils die konvexe Oberfläche in die konkave Oberfläche des benachbarten Blockierelements 19 eingreifen. Für randständige der Blockierelemente 19 ist es ausreichend, wenn nur jene einem anderen Blockierelement 19 zugeordnete Oberfläche eine entsprechende konvexe oder konkave Oberfläche aufweist.

Im in Figur 6A gezeigten Beispiel ist zwischen zwei benachbarten Blockierelementen 19 jeweils ein federndes Element 25 vorgesehen, welches benachbarte Blockierelemente 19 auseinanderdrückt, um einen zufälligen Kontakt der Blockierelemente 19 zu verhindern.

Im in Figur 6B gezeigten Beispiel greifen die benachbarten Blockierelemente 19 ineinander ein und kommen auf diese Weise in Formschluss. In dieser Konfiguration können nun alle Kräfte und Momente übertragen werden. Die Stützmechanismusseile sind vorzugsweise nicht oder kaum dehnbar.

Die Funktion der in Figur 5 gezeigten Ausgestaltung wird folgend nochmal beschrieben. In der Figur 5B gezeigten Konfiguration ist der Oberarm nach unten gestreckt. Die Last verläuft also über den Schenkel 16b zum Angriffspunkt 18b, der am Beckenmodul 5 gelagert ist, beispielsweise über ein Kugelgelenk. Der Schenkel 16b befindet sich hierzu im starren Zustand. Die Blockierelemente 19 des Schenkels 16a hingegen befinden sich in einer losen Konfiguration, in der sie lediglich auf dem Stützmechanismusseil 17a aufgereiht sind. Dreht sich nun das Drehgelenk 6 aufgrund der Wirkung des Motors 9, so werden ab einem bestimmten Winkel zwischen der armseitigen Verbindung 7 und der beckenseitigen Verbindung 8 die Blockierelemente des Schenkels 16b lose und jene des Schenkels 16a starr. Dies ist in Figur 5A dargestellt. Kräfte können nun nicht mehr über Schenkel 16b übertragen werden, sondern nur noch über Schenkel 16a, so dass sich der effektive Lagerpunkt zum Angriffspunkt 18a des Schenkels 16a am Beckenmodul 5 verschiebt. Auch der Angriffspunkt 18a ist vorzugsweise gelagert am Beckenmodul 5 angeordnet, beispielsweise über ein Kugelgelenk.

Die Angriffspunkte 18a und 18b können hier am Beckenmodul 5 drehbar fixiert sein und müssen nicht verschiebbar sein.

In jener Ausgestaltung der Erfindung, die ohne Schiene 11 auskommt und stattdessen einen Stützmechanismus 16 einsetzt, verlagert sich die Position des Kraftangriffspunkts im Bereich des Beckens von einem der Schenkel 16a, 16b auf den anderen der Schenkel 16a, 16b abhängig vom Winkel der armseitigen Verbindung 7 und der beckenseitigen Verbindung 8. Durch die Verschiebung des Kraftangriffspunktes ändert sich auch der Kraftvektor, der auf den Arm 2 zeigt. Es wird bewirkt, dass der Kraftangriffsvektor immer möglichst senkrecht auf den Arm 2 zeigt.

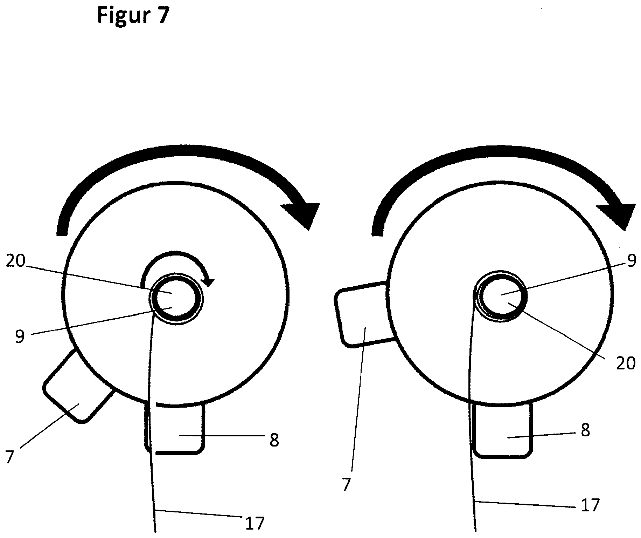

In den Figuren 5 und 6 werden die Schenkel 16a, 16b in den starren Zustand versetzt, in dem das entsprechende Stützmechanismusseil 17a, 17b angezogen wird. Vorteilhafterweise wird dieses Anziehen mittels des Antriebs 9 bewirkt. Figur 7 zeigt ein Beispiel, wie ein Stützmechanismusseil 17 mittels des Antriebs 9 angezogen werden kann. Hierzu ist das Stützmechanismusseil 17 um eine Rolle 20 gewickelt, die über eine Rutschkupplung mit dem Antrieb 9 verbunden ist. Der Antrieb 9 kann auf diese Weise durch eine Drehung, die er ausführt, um die armseitige Verbindung 7 gegenüber der beckenseitigen Verbindung 8 zu bewegen, eine Drehung der Rolle 20 bewirken, wodurch das Stützmechanismusseil 17 aufgerollt und angezogen wird. Das jeweils andere der Stützmechanismusseile 17a, 17b würde in Figur 7 mit entgegengesetztem Umlaufsinn um die Rolle 20 oder eine mit dieser fest verbundenen Rolle 20 gewickelt werden, so dass immer bei einer Drehung des Antriebs 9 ein Seil 17a, 17b angezogen wird und ein Seil 17a, 17b gelöst wird. Auf diese Weise wird immer einer der Schenkel 16a, 16b in starren Zustand versetzt, während der andere Schenkel 16a, 16b in den flexiblen Zustand versetzt wird.

In der in Figur 7 gezeigten Rutschkupplung dreht sich bei Drehung des Antriebs 9 die Seilwinde 20 und wickelt das Seil 17 auf, wodurch die Blockierelemente 19 zusammengezogen werden. Sind diese vollständig zusammengezogen, so erhöht sich plötzlich die Kraft, mit der am Seil 17 gezogen wird, schlagartig, da die Elemente nicht weiter zueinander hingezogen werden können. Hier greift nun die Rutschkupplung, die verhindert, dass weiter Momente über einen definierten Grenzwert hinaus auf das Stützmechanismusseil 17 übertragen werden können.

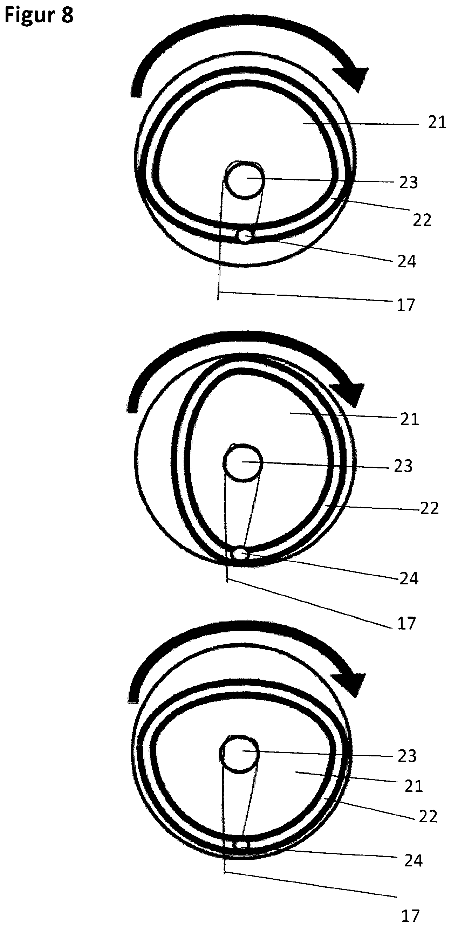

Figur 8 zeigt eine weitere Möglichkeit, das Stützmechanismusseil 17 zu spannen. Im in Figur 8 gezeigten Beispiel ist das entsprechende Stützmechanismusseil 17 jeweils mit einem Ende an einem Verfolger 24 befestigt, der auf einer Bahn 22 einer Kurvenscheibe 21 verschiebbar ist. Eine Position des Verfolgers 24 in Umfangsrichtung der Kurvenscheibe wird dabei vorzugsweise fixiert, so dass der Verfolger 24 sich nur in radiale Richtung bewegen kann, aber nicht in Umfangsrichtung der Kurvenscheibe 21. Die Bahn 22 ist im gezeigten Beispiel so ausgestaltet, dass sie Abschnitte unterschiedlichen Abstands von einer Drehachse der Kurvenscheibe 21 aufweist, die hier durch die Mitte der Kurvenscheibe 21 verläuft. Das Stützmechanismusseil verläuft dann vom Schenkel kommend um eine Umlenkrolle 23 zum Verfolger 24. Wird die Kurvenscheibe 21 in eine solche Position gedreht, dass sich der Verfolger 24 in einem Abschnitt der Bahn befindet, die einen großen Abstand vom Mittelpunkt hat, so ist das Stützmechanismusseil 17 angezogen und der entsprechende Schenkel 16a, 16b befindet sich im starren Zustand. Wird die Kurvenscheibe 21 hingegen so gedreht, dass sich der Verfolger 24 an einer Position der Bahn 22 befindet, die einen geringen Abstand zum Mittelpunkt hat, so wird das Stützmechanismusseil 17 nachgelassen und der entsprechende Schenkel 16a, 16b befindet sich im flexiblen Zustand.

Neben den in den Figuren 6 bis 8 gezeigten Möglichkeiten bestehen auch andere Möglichkeiten, eine variable Steifigkeit bzw. Rigidität der Schenkel 16a, 16b zu realisieren. So können beispielsweise Fluide unter Drücken oder Verklemmungslösungen gewählt werden.

Neben den in Figuren 5 bis 8 gezeigten Lösungen mit variabler Steifigkeit der Schenkel 16a und 16b sind auch Lösungen denkbar, in denen die Kraft über rigide Elemente, die also keine variable Steifigkeit haben, übertragen wird, die jedoch abhängig vom Winkel des Drehgelenks 6 Kraft übertragen können oder nicht. So könnte beispielsweise der Schenkel 16a frei beweglich, mittels eines prismatischen oder Drehgelenks, in der beckenseitigen Verbindung 8 gleiten, während der Schenkel 16b und die beckenseitige Verbindung 8 fest verbunden sind. Ab einem bestimmten Winkel des Drehgelenkes 6 können sich in einem solchen Beispiel der Schenkel 16a und die beckenseitige Verbindung 8 verklemmen, so dass Gelenkfreiheitsgrade der beiden Elemente unterbunden werden und Kraft kann über den Angriffspunkt 18a übertragen werden. Gleichzeitig kann sich, ebenfalls abhängig vom Winkel, die Lagerstelle 18b aus ihrer Verankerung lösen, wodurch hier keine Kraft übertragen werden kann. Wird der Motorwinkel wieder verkleinert, wird die Verschiebung der Lagerung 18b ab einem definierten Winkel wieder verbunden und Kraftübertragung ist wieder möglich. Gleichzeitig kann sich die verblockte Verbindung zwischen dem Schenkel 16a und der beckenseitigen Verbindung 8 lösen, wobei über den Angriffspunkt 18a dann keine Kräfte mehr übertragen werden.

In allen Figuren kann vorteilhafterweise die armseitige Verbindung 7 mit dem Armangriff 4 über ein Gelenk verbunden sein und/oder die beckenseitige Verbindung 8 mit dem Beckenmodul 5 über ein Gelenk verbunden sein.

Besonders vorteilhaft ist, dass der erfindungsgemäße Arm-Unterstützungsmechanismus mit einem aktiven Antriebselement auskommt. Darüber hinaus kann der aktive Mechanismus in zwei entgegengesetzte Richtungen Kraftunterstützung geben. Ein weiterer Vorteil ist die verschiebbare Anbringung des Mechanismus am Beckenmodul, womit die Kraftwirkung auf die Anwendung und den Anwender angepasst eingestellt werden kann. So kann beispielsweise Schieben und Ziehen besser unterstützt werden mit höherem Ansatzpunkt als bei Heben, Halten und Unterstützen über Schulterhöhe. Durch den Verzicht auf weitere Aktoren kann weiter Gewicht eingespart werden, die Steuerungskomplexität reduziert werden und die Bewegungsfreiheit des Trägers verbessert werden.

## Patentansprüche

1. Arm-Unterstützungsmechanismus zur Unterstützung einer Bewegung
eines Armes (2) eines Benutzers (1) um einen Schulterkomplex (3) des Benutzers (1), aufweisend
einen Armangriff (4), der eingerichtet ist, an dem Arm (2) des Benutzers (1) anzugreifen,
ein Beckenmodul (5), das eingerichtet ist, an einem Becken des Benutzers (1) anzugreifen,
ein Drehgelenk (6),
eine armseitige Verbindung (7), die mit einem armangriffseitigen Ende am Armangriff (4) angeordnet ist, und die mit einem drehgelenkseitigen Ende am Drehgelenk (6) angeordnet ist,
eine beckenseitige Verbindung (8), die mit einem beckenmodulseitigen Ende an dem Beckenmodul (5) angeordnet ist und die mit ihrem entgegengesetzten Ende am Drehgelenk (6) angeordnet ist,
einen Antrieb (9), der eingerichtet ist, das Drehgelenk (6) um eine Drehachse des Drehgelenks (6) anzutreiben,
wobei das Drehgelenk (6) eingerichtet ist, die armseitige Verbindung (7) und die beckenseitige Verbindung (8) um die Drehachse des Drehgelenks (6) gegeneinander zu bewegen,
**dadurch gekennzeichnet, dass**
das Beckenmodul (5) eine Verstell-Einheit aufweist, auf der das beckenmodulseitige Ende der beckenseitigen Verbindung (8) verschiebbar ist.

2. Arm-Unterstützungsmechanismus nach dem vorhergehenden Anspruch, wobei der Antrieb (9) ein Drehantrieb ist, der am Drehgelenk (6) angeordnet ist, wobei vorzugsweise eine Drehachse des Drehantriebs zur Drehachse des Drehgelenks (6) parallel oder koaxial ist.

3. Arm-Unterstützungsmechanismus nach einem der vorhergehenden Ansprüche, wobei die Verstell-Einheit eine Schiene (11), eine Verstellschiene oder in Reihe geschaltete Drehgelenke aufweist, wobei vorzugsweise die Schiene (11) in einem Zustand, in dem der Arm-Unterstützungsmechanismus bestimmungsgemäß an dem Benutzer (1) angeordnet ist, von dorsal kranial nach ventral kaudal verläuft, und/oder wobei das beckenmodulseitige Ende der beckenseitigen Verbindung (8) an der Schiene (11) fixierbar ist, vorzugsweise mittels eines Schnellspanners, eines Drehrädchens, einer Klemme, einer Klemmschraube, eines Schnapphakens und/oder eines Bolzens.

4. Arm-Unterstützungsmechanismus nach dem vorhergehenden Anspruch, weiter aufweisend eine Kraftausübungsvorrichtung, mit der eine Kraft auf das beckenmodulseitige Ende der beckenseitigen Verbindung (8) ausübbar ist, mit der das beckenmodulseitige Ende der beckenseitigen Verbindung (8) entlang der Schiene (11) verschiebbar ist, wobei vorzugsweise die Kraftausübungsvorrichtung ein parallel zur Schiene (11) angeordnetes elastisches Element aufweist, vorzugsweise eine Feder (12), die mit ihrer Federachse parallel zur Schiene (11) angeordnet ist.

5. Arm-Unterstützungsmechanismus nach dem vorhergehenden Anspruch, wobei die Kraftausübungsvorrichtung ein Zahnstangengetriebe aufweist, das eine parallel zu der Schiene (11) verlaufende Zahnstange und zumindest ein am beckenmodulseitigen Ende der beckenseitigen Verbindung (8) angeordnetes Verschiebungszahnrad (13) aufweist, dass in die Zahnstange eingreift, wobei vorzugsweise das Verschiebungszahnrad (13) durch einen Verschiebungsantrieb zur Rotation antreibbar ist, wobei zwischen dem Verschiebungsantrieb und dem Verschiebungszahnrad (13) ein Zahnradgetriebe angeordnet ist, das eine Übersetzung eines Drehmoments des Verschiebungsantriebs zum Verschiebungszahnrad (13) bewirkt.

6. Arm-Unterstützungsmechanismus nach dem vorhergehenden Anspruch, weiter aufweisend einen Zahnriemen (14), der einerseits um ein Antriebszahnrad verläuft, das durch den Antrieb direkt oder über ein Zahnradegetriebe zur Rotation antreibbar ist, und der andererseits über ein Abtriebszahnrad verläuft, das mit dem Verschiebungszahnrad (13) identisch ist oder mit dem Verschiebungszahnrad (13) über ein Zahnradgetriebe verbunden ist.

7. Arm-Unterstützungsmechanismus nach einem der Ansprüche 4 oder 5, wobei die Kraftausübungsvorrichtung ein Seilzugsystem aufweist, wobei das Seilzugsystem aufweist:
ein Seil (15), das mit einem Seilende an einem Ende der Schiene (11) befestigt ist, und das mit einem anderen Seilende an der armseitigen Verbindung (7) befestigt ist,
eine Schienenrolle (15a), die entlang der Schiene (11) verschiebbar ist und die über ein elastisches Element, vorzugsweise eine Feder, mit einem Ende der Schiene (11), vorzugsweise mit jenem Ende der Schiene (11) an dem nicht das Seil (15) befestigt ist, verbunden ist,
wobei das Seil (15) von dem Ende der Schiene (11), an dem es befestigt ist, zu der Schienenrolle (15a) verläuft, dann zumindest teilweise um die Schienenrolle (15a) herum verläuft in Richtung des Drehgelenks (6), dann teilweise um die Drehachse des Drehgelenks (6) herum verläuft zur armseitigen Verbindung (7),
wobei vorzugsweise das Seilzugsystem außerdem eine Führungsrolle (15b) aufweist, um die das Seil (15) zwischen der Schienenrolle (15a) und dem Drehgelenk (6) teilweise herum verläuft.

8. Arm-Unterstützungsmechanismus nach einem der vorhergehenden Ansprüche, wobei die beckenseitige Verbindung (8) mit dem Beckenmodul (5) über einen Stützmechanismus (16) verbunden ist,
wobei der Stützmechanismus (16) zwei Schenkel (16a, 16b) aufweist, die jeweils mit einem Ende an in, wenn der Arm-Unterstützungsmechanismus durch den Benutzer (1) bestimmungsgemäß getragen wird und der Benutzer (1) steht, horizontaler und/oder vertikaler Richtung unterschiedlichen Positionen am Beckenmodul (5) oder dorsal kranial und ventral kaudal zueinander, angeordnet sind, und die mit ihren jeweils anderen Enden am beckenmodulseitigen Ende der beckenseitigen Verbindung (8) angeordnet sind,
wobei die Schenkel (16a, 16b) jeweils so ausgestaltet sind, dass ein erster der Schenkel (16a, 16b) starr ist und ein zweiter der Schenkel (16a, 16b) flexibel ist, wenn sich die armseitige Verbindung (7) zur beckenseitigen Verbindung (8) in einem ersten Winkelbereich um die Drehachse des Drehgelenks (6) befindet und dass der erste Schenkel flexibel und der zweite Schenkel starr ist, wenn sich die armseitige Verbindung (7) zur beckenseitigen Verbindung (8) in einem zweiten Winkelbereich, der von dem ersten Winkelbereich verschieden ist, um die Drehachse des Drehgelenks (6) befindet,
wobei vorzugsweise der erste Winkelbereich in Richtung des ersten Schenkels neben dem zweiten Winkelbereich angeordnet ist.

9. Arm-Unterstützungsmechanismus nach dem vorhergehenden Anspruch, wobei die Schenkel (16a, 16b) jeweils eine Vielzahl von Blockierelementen (19) aufweisen,
wobei die Blockierelemente (19) der Schenkel (16a, 16b) für jeden Schenkel jeweils auf einem Stützmechanismusseil (17a, 17b) aufgereiht sind,
wobei die Blockierelemente (19) so ausgestaltet sind, dass sie eine Drehung benachbarter Blockierelemente (19) um zum Stützmechanismusseil (17a, 17b) nicht parallele Drehachsen blockieren, wenn die benachbarten Blockierelemente (19) gegeneinander gedrückt werden.

10. Arm-Unterstützungsmechanismus nach dem vorhergehenden Anspruch, und wobei die Blockierelemente (19) so ausgestaltet sind, dass benachbarte der Blockierelemente (19) ineinander eingreifen, wenn sie auf dem Stützmechanismusseil (17a, 17b) aneinander anliegen,
wobei vorzugsweise die Blockierelemente (19) jeweils in einer Richtung entlang des entsprechenden Stützmechanismusseiles (17a, 17b) eine konvexe Oberfläche aufweisen und in entgegengesetzter Richtung entlang des entsprechenden Stützmechanismusseiles (17a, 17b) eine konkave Oberfläche aufweisen, die zur konvexen Oberfläche parallel liegt.

11. Arm-Unterstützungsmechanismus nach einem der beiden vorhergehenden Ansprüche, wobei die Stützmechanismusseile (17a, 17b) der beiden Schenkel (16a, 16b) jeweils mit einem Ende an jenem Ende des entsprechenden Schenkels (16a, 16b) befestigt sind, mit dem dieser Schenkel (16a, 16b) am Beckenmodul (5) befestigt ist, und mit ihrem anderen Ende an einer Seilzugrolle (20) befestigt sind, die koaxial zum Antrieb angeordnet ist und durch den Antrieb zur Rotation antreibbar ist, wobei die Stützmechanismusseile (17a, 17b) der beiden Schenkel (16a, 16b) eine Drehachse der Seilzugrolle (20) in entgegengesetzter Richtung zumindest teilweise umlaufen, wobei vorzugsweise die Seilzugrolle (20) mit dem Antrieb über eine Rutschkupplung verbunden ist.

12. Arm-Unterstützungsmechanismus nach einem der Ansprüche 9 bis 11, wobei die Stützmechanismusseile (17a, 17b) der beiden Schenkel (16a, 16b) jeweils mit einem Ende an jenem Ende des entsprechenden Schenkels (16a, 16b) befestigt sind, mit dem dieser Schenkel (16a, 16b) am Beckenmodul (5) befestigt ist, und mit ihrem anderen Ende an jeweils an einem Verfolger (24) befestigt sind, der auf einer Bahn (22) einer Kurvenscheibe (21) verschiebbar ist,
wobei die Kurvenscheibe (21) um eine Kurvenscheibendrehachse drehbar ist während vorzugsweise eine Position des Verfolgers (24) in Umfangsrichtung um die Kurvenscheibendrehachse konstant ist,
wobei die Bahn (22) Abschnitte unterschiedlichen Abstands von der Kurvenscheibendrehachse aufweist,
wobei die Kurvenscheibe (21) außerdem ein Umlenkelement (23) aufweist, das parallel oder koaxial zur Kurvenscheibendrehachse auf jener Seite der Kurvenscheibe (21) steht, auf der der Verfolger (24) angeordnet ist, so dass das entsprechende Stützmechanismusseil (17a, 17b) zumindest teilweise um das Umlenkelement (23), vorzugsweise dieses berührend, verläuft wenn der Verfolger (24) eine geeignete Position hat.

13. Arm-Unterstützungsmechanismus nach einem der vorhergehenden Ansprüche, wobei der Armangriff (4) mit der armseitigen Verbindung (7) über ein Gelenk verbunden ist, vorzugsweise ein Kardangelenk, ein Scharniergelenk oder ein Kugelgelenk, und/oder wobei der das Beckenmodul (5) mit der beckenseitigen Verbindung (8) über ein Gelenk verbunden ist, vorzugsweise ein Kardangelenk, ein Scharniergelenk oder ein Kugelgelenk.

14. Arm-Unterstützungsmechanismus nach einem der vorhergehenden Ansprüche, wobei die beckenseitige Verbindung (8) und/oder die armseitige Verbindung (7) eine Teleskopstange aufweist, mit der ein Abstand zwischen dem Beckenmodul (5) und dem Drehgelenk (6) einstellbar ist.

15. Arm-Unterstützungsmechanismus nach einem der beiden vorhergehenden Ansprüche, aufweisend einen Anschlag, der einen Bewegungswinkelbereich des Gelenkes, über das das Beckenmodul (5) mit der beckenseitigen Verbindung (8) verbunden ist, begrenzt, wobei vorzugsweise der Anschlag zur Einstellung des Bewegungswinkelbereichs verschiebbar ist.

## Claims

1. An arm support mechanism for supporting a movement of an arm (2) of a user (1) around a shoulder complex (3) of the user (1), comprising
an arm engagement unit (4), which is configured to engage with the arm (2) of the user (1),
a pelvic module (5), which is configured to engage with the pelvis of the user (1),
a pivot joint (6),
an arm-side connection (7), which is arranged with an arm engagement unit-side end on the arm engagement unit (4), and which is arranged with a pivot joint-side end on the pivot joint (6),
a pelvis-side connection (8), which is arranged with a pelvic module-side end on the pelvic module (5) and which is arranged with its opposite end on the pivot joint (6),
a drive (9), which is configured to drive the pivot joint (6) about an axis of rotation of the pivot joint (6),
wherein the pivot joint (6) is configured to move the arm-side connection (7) and the pelvis-side connection (8) relative to one another about the axis of rotation of the pivot joint (6),
**characterized in that** the pelvic module (5) comprises an adjustment unit on which the pelvic module-side end of the pelvis-side connection (8) can be displaced.

2. The arm support mechanism according to the preceding claim,
wherein the drive (9) is a rotary drive, which is arranged on the pivot joint (6), wherein preferably an axis of rotation of the rotary drive is parallel or coaxial to the axis of rotation of the pivot joint (6).

3. The arm support mechanism according to any one of the preceding claims, wherein the adjustment unit comprises a rail (11), an adjustment rail or series-connected pivot joints, wherein preferably the rail (11) extends in a state in which the arm support mechanism is arranged on the user (1) as intended from dorsal cranial to ventral caudal, and/or wherein the pelvic module-side end of the pelvis-side connection (8) can be fixed to the rail (11), preferably by means of a quick-release, a rotating wheel, a clamp, a clamping screw, a snap hook and/or a bolt.

4. The arm support mechanism according to the preceding claim, further comprising a force exerting device, by which a force can be exerted on the pelvic module-side end of the pelvis-side connection (8), with which the pelvic module-side end of the pelvis-side connection (8) can be displaced along the rail (11), wherein preferably the force-exerting device comprises an elastic element arranged parallel to the rail (11), preferably a spring (12), which is arranged with its spring axis parallel to the rail (11).

5. The arm support mechanism according to the preceding claim,
wherein the force-exerting device has a rack-and-pinion gear which has a rack extending parallel to the rail (11) and at least one displacement gear (13) which is arranged at the pelvic module-side end of the pelvis-side connection (8) and engages in the rack, wherein preferably the displacement gear (13) can be driven by a displacement drive for rotation, wherein a gear transmission is arranged between the displacement drive and the displacement gear (13), which effects a transmission of a torque of the displacement drive to the displacement gear (13).

6. The arm support mechanism according to the preceding claim, further comprising a toothed belt (14), which runs on the one hand around a drive gearwheel, which can be driven by the drive directly or via a gear transmission for rotation, and which runs on the other hand over an output gear which is identical to the displacement gear (13) or is connected to the displacement gear (13) via a gear transmission.

7. The arm support mechanism according to any one of claims 4 or 5, wherein the force-exerting device comprises a cable pull system, wherein the cable pull system comprises:
a cable (15), which is attached at one cable end to one end of the rail (11), and which is attached at another cable end to the arm-side connection (7),
a rail roller (15a), which can be displaced along the rail (11) and which is connected via an elastic element, preferably a spring, to an end of the rail (11), preferably to that end of the rail (11) to which the cable (15) is not attached,
wherein the cable (15) runs from the end of the rail (11) to which it is attached, to the rail roller (15a), then runs at least partly around the rail roller (15a) in the direction of the pivot joint (6) then runs partly around the axis of rotation of the pivot joint (6) to the arm-side connection (7),
wherein preferably the cable pull system further comprises a guide roller (15b), around which the cable (15) runs partly between the rail roller (15a) and the pivot joint (6).

8. The arm support mechanism according to any one of the preceding claims, wherein the pelvis-side connection (8) is connected to the pelvic module (5) via a support mechanism (16),
wherein the support mechanism (16) has two legs (16a, 16b), which are each arranged with one end at different positions on the pelvic module (5) or dorsally cranial and centrally caudal to one another in different horizontal and/or vertical directions when the arm support mechanism is worn as intended by the user (1) and the user (1) is standing, and which are arranged with their respective other ends on the pelvic module-side end of the pelvis-side connection (8),
wherein the legs (16a, 16b) are each configured such that a first of the legs (16a, 16b) is rigid and a second of the legs (16a, 16b) is flexible, when the arm-side connection (7) to the pelvis-side connection (8) is located in a first angular range about the axis of rotation of the pivot joint (6) and such that the first leg is flexible and the second leg is rigid, when the arm-side connection (7) to the pelvis-side connection (8) is located in a second angular range, which is different from the first angular range, about the axis of rotation of the pivot joint (6),
wherein preferably the first angular range is arranged adjacent to the second angular range in the direction of the first leg.

9. The arm support mechanism according to the preceding claim,
wherein the legs (16a, 16b) each comprise a plurality of blocking elements (19),
wherein the blocking elements (19) of the legs (16a, 16b) for each leg are lined up on a support mechanism cable (17a, 17b), wherein the blocking elements (19) are configured so that they block a rotation of adjacent blocking elements (19) about axes of rotation which are not parallel to the support mechanism cable (17a, 17b) when the adjacent blocking elements (19) are pressed against one another.

10. The arm support mechanism according to the preceding claim, and wherein the blocking elements (19) are configured such that adjacent blocking elements (19) engage with one another, when they bear on one another on the support mechanism cable (17a, 17b),
wherein preferably the blocking elements (19) each have a convex surface in a direction along the corresponding support mechanism cable (17a, 17b) and have a concave surface in the opposite direction along the corresponding support mechanism cable (17a, 17b), which is parallel to the convex surface.

11. The arm support mechanism according to any one of the two preceding claims, wherein the support mechanism cables (17a, 17b) of the two legs (16a, 16b) are each fastened with one end to that end of the corresponding leg (16a, 16b), with which this leg (16a, 16b) is attached to the pelvic module (5), and are attached with their other end to a cable pulley (20), which is arranged coaxially to the drive and can be driven by the drive for rotation, wherein the support mechanism cables (17a, 17b) of the two legs (16a, 16b) rotate at least partially about an axis of rotation of the cable pulley (20) in opposite direction, wherein preferably the cable pulley (20) is connected to the drive by a slip clutch.

12. The arm support mechanism according to any one of claims 9 to 11, wherein the support mechanism cables (17a, 17b) of the two legs (16a, 16b) are each attached with one end to that end of the corresponding leg (16a, 16b) with which this leg (16a, 16b) is attached to the pelvic module (5), and are each attached with their other end to a follower (24), which is displaceable on a path (22) of a cam disc (21),
wherein the cam disc (21) is rotatable about a cam disc axis of rotation, while preferably a position of the follower (24) in the circumferential direction about the cam disc axis of rotation is constant,
wherein the path (22) comprises sections at a different distance from the cam disc axis of rotation,
wherein the cam disc (21) further comprises a deflection element (23), which is parallel or coaxial to the cam disc axis of rotation on that side of the cam disc (21), on which the follower (24) is arranged, so that the corresponding support mechanism cable (17a, 17b) runs at least partly around the deflection element (23), preferably contacting it, when the follower (24) is in a suitable position.

13. The arm support mechanism according to any one of the preceding claims, wherein the arm engagement unit (4) is connected to the arm-side connection (7) via a joint, preferably a universal joint, a hinge joint or a ball joint, and/or wherein the pelvic module (5) is connected to the pelvis-side connection (8) via a joint, preferably a universal joint, a hinge joint or a ball joint.

14. The arm support mechanism according to any one of the preceding claims, wherein the pelvis-side connection (8) and/or the arm-side connection (7) has a telescopic rod, by which a distance can be adjusted between the pelvic module (5) and the pivot joint (6).

15. The arm support mechanism according to any one of the two preceding claims, comprising a stop, which limits a movement angular range of the joint, via which the pelvic module (5) is connected to the pelvis-side connection (8), wherein preferably the stop can be displaced for adjusting the movement angular range.

## Revendications

1. Mécanisme de soutien de bras pour soutenir le mouvement d'un bras (2) d'un utilisateur (1) autour d'un complexe d'épaule (3) de l'utilisateur (1), comprenant
un élément de mise en prise de bras (4) qui est conçu pour une mise en prise avec le bras (2) de l'utilisateur (1),
un module de bassin (5) qui est conçu pour venir en prise avec le bassin d'un utilisateur (1),
une articulation rotative (6),
une liaison côté bras (7) qui est agencée avec une extrémité côté élément de mise en prise de bras au niveau de l'élément de mise en prise de bras (4) et qui est agencée avec une extrémité côté articulation rotative au niveau de l'articulation rotative (6),
une liaison côté bassin (8) qui est agencée avec une extrémité côté module de bassin au niveau du module de bassin (5) et qui est agencée avec son extrémité opposée au niveau de l'articulation rotative (6),
un entraînement (9) qui est conçu pour entraîner l'articulation rotative (6) autour d'un axe de rotation de l'articulation rotative (6),
dans lequel l'articulation rotative (6) est conçue pour déplacer la liaison côté bras (7) et la liaison côté bassin (8) autour de l'axe de rotation de l'articulation rotative (6) l'une par rapport à l'autre,
**caractérisé en ce que** le module de bassin (5) présente une unité de réglage sur laquelle l'extrémité côté module de bassin de la liaison côté bassin (8) peut être déplacée.

2. Mécanisme de soutien de bras selon la revendication précédente, dans lequel l'entraînement (9) est un entraînement rotatif est agencé au niveau de l'articulation rotative (6), dans lequel de préférence un axe de rotation de l'entraînement rotatif est parallèle ou coaxial à l'axe de rotation de l'articulation rotative (6).

3. Mécanisme de soutien de bras selon l'une quelconque des revendications précédentes, dans lequel l'unité de réglage présente un rail (11), un rail de réglage ou des articulations rotative reliées en série, dans lequel de préférence le rail (11), dans un état dans lequel le mécanisme de soutien de bras est agencé au niveau de l'utilisateur (1) comme prévu, s'étend de cranial dorsal à caudal ventral, et/ou dans lequel l'extrémité côté module de bassin de la liaison côté bassin (8) peut être fixée au rail (11), de préférence au moyen d'un système de serrage rapide, d'une molette rotative, d'une pince, d'une vis de serrage, d'un mousqueton et/ou d'un boulon.

4. Mécanisme de soutien de bras selon la revendication précédente, comprenant en outre un dispositif d'exercice de force avec lequel une force peut être exercée sur l'extrémité côté module de bassin de la liaison côté bassin (8), avec laquelle l'extrémité côté module de bassin de la liaison côté bassin (8) peut être déplacée le long du rail (11), le dispositif d'exercice de force comportant de préférence un élément élastique agencé parallèlement au rail (11), de préférence un ressort (12) qui est agencé avec son axe de ressort parallèle au rail (11).

5. Mécanisme de soutien de bras selon la revendication précédente, dans lequel le dispositif d'exercice de force comprend un engrenage à crémaillère qui comprend une crémaillère s'étendant parallèlement au rail (11) et au moins un engrenage de déplacement (13) agencé au niveau de l'extrémité côté module de bassin de la liaison côté bassin (8) qui vient en prise dans la crémaillère, dans lequel de préférence l'engrenage de déplacement (13) peut être entraîné en rotation par un entraînement de déplacement, dans lequel une transmission à engrenages est agencée entre l'entraînement de déplacement et l'engrenage de déplacement (13), qui effectue une transmission d'un couple de l'entraînement de déplacement vers l'engrenage de déplacement (13).

6. Mécanisme de soutien de bras selon la revendication précédente, comprenant en outre une courroie crantée (14) qui, d'une part, court autour d'un engrenage d'entraînement qui peut être entraînée en rotation par l'entraînement directement ou par l'intermédiaire d'une transmission à engrenages et qui, d'autre part, court sur un engrenage de sortie qui, est identique à l'engrenage de déplacement (13) ou est relié à l'engrenage de déplacement (13) par l'intermédiaire d'une transmission à engrenages.

7. Mécanisme de soutien de bras selon l'une quelconque des revendications 4 ou 5, dans lequel le dispositif d'application de force comprend un système de traction par câble, le système de traction par câble comprenant :
un câble (15) qui est fixé par une extrémité de câble à une extrémité du rail (11) et qui est fixée par une autre extrémité de câble à la liaison côté bras (7),
un galet de rail (15a), qui peut être déplacé le long du rail (11) et qui est relié via un élément élastique, de préférence un ressort, à une extrémité du rail (11), de préférence à cette extrémité du rail (11) au niveau de laquelle le câble (15) n'est pas fixé,
dans lequel le câble (15) court depuis l'extrémité du rail (11) au niveau de laquelle il est fixé jusqu'au galet de rail (15a), puis court au moins partiellement autour du galet de rail (15a) dans la direction de l'articulation rotative (6), puis tourne partiellement autour de l'axe de rotation de l'articulation rotative (6) jusqu'à la liaison côté bras (7),
dans lequel, de préférence, le système de traction par câble présente en outre un galet de guidage (15b) autour duquel le câble (15) court partiellement entre le galet de rail (15a) et l'articulation rotative (6).

8. Mécanisme de soutien de bras selon l'une quelconque des revendications précédentes, dans lequel la liaison côté bassin (8) est reliée au module de bassin (5) par l'intermédiaire d'un mécanisme de support (16),
dans lequel le mécanisme de support (16) comprend deux branches (16a, 16b), qui sont respectivement agencées avec une extrémité vers l'intérieur, lorsque le mécanisme de soutien de bras est porté comme prévu par l'utilisateur (1) et l'utilisateur (1) est debout, plus horizontalement et/ ou verticalement, dans des positions différentes sur le module de bassin (5) ou dorsale coulisseau et ventrale l'une caudale par rapport à l'autre, et qui sont agencées avec leurs autres extrémités au niveau de l'extrémité côté module de bassin de la liaison côté bassin (8),
dans lequel les branches (16a, 16b) sont conçues respectivement de telle manière qu'une première des branches (16a, 16b) est rigide et qu'une seconde des branches (16a, 16b) est flexible lorsque la liaison côté bras (7) à la liaison côté bassin (8) se trouve dans une première plage angulaire autour de l'axe de rotation de l'articulation rotative (6) et que la première branche est flexible et la seconde branche est rigide lorsque la liaison côté bras (7) à la liaison côté bassin (8) se trouve dans une seconde plage angulaire, qui est différente de la première plage angulaire, autour de l'axe de rotation de l'articulation rotative (6),
dans lequel, de préférence, la première plage angulaire est agencée dans la direction de la première branche à côté de la seconde plage angulaire.

9. Mécanisme de soutien de bras selon la revendication précédente, dans lequel les branches (16a, 16b) comportent chacun une pluralité d'éléments de blocage (19),
dans lequel les éléments de blocage (19) des branches (16a, 16b) sont alignés pour chaque branche sur un câble de mécanisme de support (17a, 17b), les éléments de blocage (19) étant conçus de telle sorte qu'ils bloquent une rotation d'éléments de blocage adjacents (19) autour d'axes de rotation non parallèles au câble de mécanisme de support (17a, 17b) lorsque les éléments de blocage (19) adjacents sont pressés l'un contre l'autre.

10. Mécanisme de soutien de bras selon la revendication précédente, et dans lequel les éléments de blocage (19) sont conçus de telle sorte que les éléments de blocage (19) adjacents viennent en prise les uns dans les autres lorsqu'ils viennent en butée l'un contre l'autre sur le câble de mécanisme de support (17a, 17b),
dans lequel de préférence les éléments de blocage (19) présentent chacun une surface convexe dans une direction le long du câble de mécanisme de support correspondant (17a, 17b) et dans une direction opposée le long du câble de mécanisme de support correspondant (17a, 17b) présentent une surface concave qui est parallèle à la surface convexe.

11. Mécanisme de soutien de bras selon l'une des deux revendications précédentes, dans lequel les câbles de mécanisme de support (17a, 17b) des deux branches (16a, 16b) sont fixés chacun avec une extrémité à une extrémité de la branche correspondante (16a, 16b), avec lesquels cette branche (16a, 16b) est fixé au module de bassin (5), et sont fixés par leur autre extrémité à une poulie à câble (20), qui est agencée coaxiale ment à l'entraînement et peut être entraînée en rotation par l'entraînement, dans lequel les câble de mécanisme de support (17a, 17b) des deux branches (16a, 16b) tournent au moins partiellement autour d'un axe de rotation de la poulie à câble (20) dans la direction opposée, dans lequel la poulie à câble (20) est de préférence reliée à l'entraînement par un accouplement à friction.

12. Mécanisme de soutien de bras selon l'une quelconque des revendications 9 à 11, dans lequel les câbles de mécanisme de support (17a, 17b) des deux branches (16a, 16b) sont fixés chacun avec une extrémité à une extrémité de la branche correspondante (16a, 16b) avec lesquels cette branche (16a, 16b) est fixé au module de bassin (5) et sont fixés par leur autre extrémité respectivement à un suiveur (24) qui peut déplacer sur une voie (22) d'une came (21),
dans lequel la came (21) peut tourner autour d'un axe de rotation de came alors qu'une position du suiveur (24) est de préférence constante dans la direction circonférentielle autour de l'axe de rotation de came,
dans lequel la voie (22) présente des sections de distance différente de l'axe de rotation de la came,
dans lequel la came (21) comprend en outre un élément déflecteur (23) qui est parallèle ou coaxial à l'axe de rotation de la came du côté de la came (21) sur lequel le suiveur (24) est agencé, de sorte que le câble de mécanisme de support correspondant (17a, 17b) court au moins partiellement autour de l'élément déflecteur (23), de préférence en contact avec celui-ci, lorsque le suiveur (24) présente une position appropriée.

13. Mécanisme de soutien de bras selon l'une quelconque des revendications précédentes, dans lequel l'élément de mise en prise de bras (4) est reliée à la liaison côté bras (7) par l'intermédiaire d'une articulation, de préférence une articulation à cardan, une articulation à charnière ou une articulation à rotule, et/ou dans lequel le module de bassin (5) est relié à la liaison côté bassin (8) par l'intermédiaire d'une articulation, de préférence une articulation à cardan, une articulation à charnière ou une articulation à rotule.

14. Mécanisme de soutien de bras selon l'une quelconque des revendications précédentes, dans lequel la liaison côté bassin (8) et/ou la liaison côté bras (7) présente une tige télescopique à l'aide de laquelle une distance entre le module de bassin (5) et l'articulation rotative (6) peut être ajustée.

15. Mécanisme de soutien de bras selon l'une des deux revendications précédentes, comprenant une butée qui limite une plage d'angle de déplacement de l'articulation par laquelle le module de bassin (5) est relié à la liaison côté bassin (8), la butée étant de préférence déplaçable pour ajuster la plage d'angle de déplacement.
